# EUROPEAN PATENT APPLICATION

(11) **EP 4 458 611 A1**
(43) Date of publication of application: **06.11.2024**
(21) Application number: 22915413.3
(22) Date of filing: 27.04.2022
(51) Int. Cl.: B60N 2/06, B60N 2/90

(54) **VEHICLE SEAT**

(30) Priority: 27.12.2021 US 202163293891 P
(71) Applicant: TS Tech Co., Ltd., Asaka-shi Saitama 351-0012 (JP)
(72) Inventor: ITO, Takayoshi, Shioya-gun, Tochigi 329-1217 (JP); NARITA, Kazumasa, Shioya-gun, Tochigi 329-1217 (JP); SUGITA, Tatsuya, Shioya-gun, Tochigi 329-1217 (JP); KOZUTSUMI, Hiroyuki, Shioya-gun, Tochigi 329-1217 (JP); KASHINO, Ryuta, Shioya-gun, Tochigi 329-1217 (JP)
(74) Representative: Potter Clarkson
(86) International application number: PCT/JP2022/019124
(87) International publication number: WO 2023/127177

(57) **Abstract**

Provided is a vehicle seat (1): comprising a pair of lower rails (10) which are arranged in parallel with each other, a first upper rail (21) and a second upper rail (22) which are arranged side by side in the length direction of the pair of lower rails (10), each of which is arranged on each lower rail (10), and which can move along the lower rails (10), a first seat (31) coupled to the first upper rail (21), a second seat (32) coupled to the second upper rail (22), a first power supply facility (51) which supplies electric power to an electric component (40) provided to the first seat (31), and a second power supply facility 52 which supplies electric power to the electric component (40) provided to the second seat (32), wherein the first power supply facility (51) and the second power supply facility (52) are arranged so as to extend in a direction along the length direction of the lower rails (10).

## Description

### TECHNICAL FIELD

The present invention relates to a vehicle seat of an automobile or the like.

### BACKGROUND ART

A vehicle seat including an electrically powered slide rail that electrically moves a seat along a rail has been conventionally known (for example, see Patent Document 1) .

This electrically powered slide rail includes a lower rail and an upper rail that moves along the lower rail. A seat is coupled to the upper rail, and the upper rail is moved along the lower rail by driving of a motor located in the upper rail, thereby sliding the seat back and forth.

Specifically, the motor located in the upper rail rotates screw members engaged with a plurality of engaging holes (screw engaging portions) formed in an extending direction of the lower rail, thereby moving the upper rail along the lower rail.

A technology of power feeders, each supplying power to a drive such as a motor in an electrically powered slide rail, is also known.

For example, a power feeder including a power feeding rail and a bus bar (mover) that moves along the power feeding rail and capable of supplying power to a drive of an upper rail via the bus bar is known. In this power feeder, the bus bar connected to an end of a flexible flat cable that expands and contracts smoothly is moved along the power feeding rail, so that the bus bar is easy to follow the movement of the upper rail. This enables suitable power supply (for example, see Patent Document 2).

For example, a power feeder including a power feeding rail and a sliding protector (mover) that moves along the power feeding rail and capable of supplying power to a drive of an upper rail via a wire harness inserted through the sliding protector is known. In this power feeder, the sliding protector moves along the power feeding rail so as to adjust a pull-out amount of the wire harness housed in a harness housing, so that the wire harness is easy to follow the movement of the upper rail. This enables suitable power supply (for example, see Patent Document 3). Note that the sliding protector is attached to the upper rail, and the sliding protector moves along a lower rail as the power feeding rail.

In a case in which various electric components, such as a heater and a fan for air conditioning as well as a seat belt reminder, are mounted on a seat installed on the electrically powered slide rail, power is also supplied to those electric components by the above-described power feeder.

### CITATION LIST

### Patent Literature

Patent Document 1: WO 2020/141600
Patent Document 2: JP 2020-32862A
Patent Document 3: JP 2016-135639A

### SUMMARY OF INVENTION

### Technical Problem

Vehicle seats having a plurality of seats installed on a long electrically powered slide rail have recently increased.

Thus, it is desired to suitably supply power to the plurality of seats (electric components) that individually slide along the rail.

An object of the present invention is to provide a vehicle seat capable of providing power to a plurality of seats that move along a rail.

### Solution to Problem

In order to realize the above object, an invention according to claim 1 is vehicle seat comprising:
a pair of lower rails arranged in parallel to each other;
a first upper rail and a second upper rail arranged on a lower rail which is each of the pair of lower rails to be aligned in a longitudinal direction of the lower rail, the first upper rail and the second upper rail being movable along the lower rail;
a first seat coupled to the first upper rail and a second seat coupled to the second upper rail;
a first power feeder that feeds power to an electric component provided for the first seat; and
a second power feeder that feeds power to an electric component provided for the second seat,
wherein the first power feeder and the second power feeder are arranged to extend in an orientation in the longitudinal direction of the lower rail.

An invention according to claim 2 is the vehicle seat according to claim 1, wherein the first power feeder and the second power feeder are located on an identical side of a lower rail which is one of the pair of lower rails.

An invention according to claim 3 is the vehicle seat according to claim 1, wherein the first power feeder and the second power feeder are located between the pair of lower rails.

An invention according to claim 4 is the vehicle seat according to claim 1, wherein the first power feeder and the second power feeder are located at positions at which a lower rail which is one of the pair of lower rails is sandwiched between the first power feeder and the second power feeder.

An invention according to claim 5 is the vehicle seat according to claim 1,
wherein the first power feeder is located at a position adjacent to a lower rail which is one of the pair of lower rails, and
wherein the second power feeder is located at a position adjacent to a lower rail which is the other one of the pair of lower rails.

An invention according to claim 6 is the vehicle seat according to any one of claims 1 to 5,
wherein the first power feeder is located at a position closer to a front end of a lower rail among the lower rails,
wherein the second power feeder is located at a position closer to a back end of a lower rail among the lower rails, and
wherein the first power feeder and the second power feeder are at least partially overlapped with each other vertically or laterally.

An invention according to claim 7 is the vehicle seat according to any one of claims 1 to 3,
wherein the first power feeder is located at a position closer to a front end of a lower rail among the lower rails,
wherein the second power feeder is located at a position closer to a back end of a lower rail among the lower rails, and
wherein a back end of the first power feeder and a front end of the second power feeder are opposed to each other.

An invention according to claim 8 is the vehicle seat according to any one of claims 1 to 5,
wherein the first power feeder has a first power feeding rail and a first mover that moves along the first power feeding rail, and the second power feeder has a second power feeding rail and a second mover that moves along the second power feeding rail.

An invention according to claim 9 is the vehicle seat according to any one of claims 1 to 3,
wherein the first power feeder and the second power feeder include a common power feeding rail, and
wherein the first power feeder has a first mover that moves along the common power feeding rail, and the second power feeder has a second mover that moves along the common power feeding rail.

An invention according to claim 10 is the vehicle seat according to any one of claims 1 to 5, further comprising:
a first seat detection sensor that detects a position of the first seat on the pair of lower rails; and
a second seat detection sensor that detects a position of the second seat on the pair of lower rails.

### Advantageous Effects of Invention

In the vehicle seat according to claim 1, the first power feeder and the second power feeder are arranged to extend in the orientation in the longitudinal direction of the lower rail. Thus, the first power feeder and the second power feeder can be arranged to have a relatively compact layout.

In the vehicle seat according to claim 2, the first power feeder and the second power feeder are located on the identical side of the lower rail which is one of the pair of lower rails, and there is no need to arrange any power feeder on the opposite side of the lower rail. Thus, the two power feeders can be arranged to have a relatively compact layout in a concentrated manner.

In the vehicle seat according to claim 3, the first power feeder and the second power feeder are located between the pair of lower rails, and there is no need to arrange any power feeder outside the pair of lower rails. Thus, the two power feeders can be arranged to have a relatively compact layout in the concentrated manner.

In the vehicle seat according to claim 4, the first power feeder and the second power feeder are located to sandwich the lower rail which is one of the pair of lower rails and to be adjacent to the lower rail. Thus, the two power feeders can be arranged to have a relatively compact layout in the concentrated manner.

In the vehicle seat according to claim 5, the first power feeder is located at a position adjacent to the lower rail which is one of the pair of lower rails, and the second power feeder is located at a position adjacent to the lower rail which is the other one of the pair of lower rails. Thus, space can be ensured between the pair of lower rails.

By overlapping the first power feeder and the second power feeder at least partially with each other vertically or laterally as in the vehicle seat according to claim 6, the first power feeder and the second power feeder can be prevented from interfering with each other.

By opposing the back end of the first power feeder and the front end of the second power feeder to each other and locating the first power feeder and the second power feeder to be aligned in the longitudinal direction as in the vehicle seat according to claim 7, the two power feeders can be arranged to have a relatively compact layout in a manner concentrated in a width direction of the vehicle seat.

When respective power feeders have movers that move along the power feeding rails as in the vehicle seat according to claim 8, the two power feeders can be arranged to have a relatively compact layout by concentrating the power feeding rails to be parallel or tandem.

When the first power feeder and the second power feeder include a common power feeding rail as in the vehicle seat according to claim 9, the two power feeders can be arranged to have a relatively compact layout in the concentrated manner.

Since the first power feeder and the second power feeder share the power feeding rail, the number of components can be reduced.

In the vehicle seat according to claim 10, the position of the first seat and the position of the second seat on the pair of lower rails can be detected.

### BRIEF DESCRIPTION OF DRAWINGS

[FIG. 1] This is a schematic side view illustrating a vehicle seat of the present embodiment.
[FIG. 2] This is a schematic top view illustrating power feeders that supply power to a plurality of seats in the vehicle seat.
[FIG. 3] This is a schematic top view illustrating power feeders that supply power to the plurality of seats in the vehicle seat.
[FIG. 4] This is a schematic top view illustrating power feeders that supply power to the plurality of seats in the vehicle seat.
[FIG. 5] This is a schematic top view illustrating power feeders that supply power to the plurality of seats in the vehicle seat.
[FIG. 6] This is a schematic top view illustrating power feeders that supply power to the plurality of seats in the vehicle seat.
[FIG. 7] This is a schematic top view illustrating power feeders that supply power to the plurality of seats in the vehicle seat.
[FIG. 8A] This is a schematic top view illustrating power feeders that supply power to the plurality of seats in the vehicle seat.
[FIG. 8B] This is a schematic cross-sectional view illustrating the power feeders that supply power to the plurality of seats in the vehicle seat.
[FIG. 9] This is a schematic top view illustrating power feeders that supply power to the plurality of seats in the vehicle seat.
[FIG. 10] This is a schematic top view illustrating power feeders that supply power to the plurality of seats in the vehicle seat.
[FIG. 11] This is a schematic top view illustrating power feeders that supply power to the plurality of seats in the vehicle seat.
[FIG. 12] This is a schematic top view illustrating power feeders that supply power to the plurality of seats in the vehicle seat.
[FIG. 13] This is a schematic top view illustrating power feeders that supply power to the plurality of seats in the vehicle seat.
[FIG. 14] This is a schematic top view illustrating power feeders that supply power to the plurality of seats in the vehicle seat.
[FIG. 15] This is a schematic top view illustrating power feeders that supply power to the plurality of seats in the vehicle seat.
[FIG. 16] This is a schematic top view illustrating power feeders that supply power to the plurality of seats in the vehicle seat.
[FIG. 17] This is a schematic top view illustrating power feeders that supply power to the plurality of seats in the vehicle seat.
[FIG. 18] This is a schematic top view illustrating power feeders that supply power to the plurality of seats in the vehicle seat.
[FIG. 19] This is a schematic top view illustrating power feeders that supply power to the plurality of seats in the vehicle seat.
[FIG. 20] This is a schematic top view illustrating power feeders that supply power to the plurality of seats in the vehicle seat.
[FIG. 21] This is a schematic top view illustrating power feeders that supply power to the plurality of seats in the vehicle seat.
[FIG. 22] This is a schematic top view illustrating power feeders that supply power to the plurality of seats in the vehicle seat.
[FIG. 23] This is a schematic top view illustrating power feeders that supply power to the plurality of seats in the vehicle seat.
[FIG. 24] This is a schematic side view illustrating a detachable seat included in the vehicle seat of the present embodiment.
[FIG. 25] This is an explanatory diagram illustrating an example of a seat attaching/detaching mechanism.
[FIG. 26] This is an explanatory diagram illustrating the example of the seat attaching/detaching mechanism.
[FIG. 27] This is an explanatory diagram illustrating the example of the seat attaching/detaching mechanism.
[FIG. 28A] This is a schematic view illustrating a power feeding connection structure of the detachable seat.
[FIG. 28B] This is a schematic view illustrating the power feeding connection structure of the detachable seat.
[FIG. 29A] This is a schematic view illustrating a power feeding connection structure of the detachable seat.
[FIG. 29B] This is a schematic view illustrating the power feeding connection structure of the detachable seat.
[FIG. 30A] This is a schematic view illustrating a power feeding connection structure of the detachable seat.
[FIG. 30B] This is a schematic view illustrating the power feeding connection structure of the detachable seat.
[FIG. 31A] This is a schematic view illustrating a power feeding connection structure of the detachable seat.
[FIG. 31B] This is a schematic view illustrating the power feeding connection structure of the detachable seat.
[FIG. 32A] This is a schematic view illustrating a power feeding connection structure of the detachable seat.
[FIG. 32B] This is a schematic view illustrating the power feeding connection structure of the detachable seat.
[FIG. 33] This is an explanatory diagram of a configuration for correcting positional information on a seat on lower rails in the vehicle seat.
[FIG. 34] This is a flowchart concerning position correction processing for the seat on the lower rails.
[FIG. 35] This is an explanatory diagram of a configuration for correcting positional information on a seat on the lower rails in the vehicle seat.
[FIG. 36] This is a flowchart concerning position correction processing for the seat on the lower rails.
[FIG. 37] This is an explanatory diagram of a configuration for correcting positional information on a seat on the lower rails in the vehicle seat.
[FIG. 38] This is a flowchart concerning position correction processing for the seat on the lower rails.
[FIG. 39] This is an explanatory diagram of a configuration for correcting positional information on a seat on the lower rails in the vehicle seat.
[FIG. 40] This is a flowchart concerning position correction processing for the seat on the lower rails.
[FIG. 41A] This is an explanatory diagram of a configuration for correcting positional information on a seat on the lower rails in the vehicle seat.
[FIG. 41B] This is an explanatory diagram of the configuration for correcting the positional information on the seat on the lower rails in the vehicle seat.
[FIG. 42] This is a flowchart concerning position correction processing for a seat on the lower rails.
[FIG. 43] This is an explanatory diagram of a configuration for synchronizing left and right drives in the vehicle seat.
[FIG. 44] This is a flowchart concerning processing of synchronously driving the left and right drives.
[FIG. 45] This is an explanatory diagram concerning the synchronous driving of the left and right drives.
[FIG. 46] This is an explanatory diagram concerning the synchronous driving of the left and right drives.
[FIG. 47] This is a flowchart concerning processing of synchronously driving the left and right drives.
[FIG. 48] This is an explanatory diagram concerning the synchronous driving of the left and right drives.
[FIG. 49] This is an explanatory diagram of a configuration for synchronizing the left and right drives in the vehicle seat.
[FIG. 50] This is a flowchart concerning processing of sensing a foreign matter that obstructs movement of a seat in the vehicle seat.
[FIG. 51] This is an explanatory diagram concerning the foreign matter sensing processing in the vehicle seat.
[FIG. 52] This is an explanatory diagram concerning driving after the foreign matter sensing processing in the vehicle seat.
[FIG. 53] This is an explanatory diagram concerning driving after the foreign matter sensing processing in the vehicle seat.
[FIG. 54] This is an explanatory diagram concerning driving after the foreign matter sensing processing in the vehicle seat.
[FIG. 55] This is an explanatory diagram of a configuration for sensing a foreign matter that obstructs movement of a seat in the vehicle seat.
[FIG. 56] This is a flowchart concerning processing of sensing a foreign matter that obstructs movement of a seat in the vehicle seat.
[FIG. 57] This is an explanatory diagram of a configuration for restricting proximation of front and rear seats in the vehicle seat.
[FIG. 58] This is a flowchart concerning processing of restricting proximation of the seats in the vehicle seat.
[FIG. 59] This is an explanatory diagram of a configuration for restricting proximation of front and rear seats in the vehicle seat.
[FIG. 60] This is a flowchart concerning processing of restricting proximation of the seats in the vehicle seat.
[FIG. 61] This is an explanatory diagram of a configuration for restricting proximation of front and rear seats in the vehicle seat.
[FIG. 62] This is a flowchart concerning processing of restricting proximation of the seats in the vehicle seat.

### DESCRIPTION OF EMBODIMENTS

Hereinafter, an embodiment of a vehicle seat according to the present invention will be described in detail with reference to the drawings. Technically preferable various limitations for carrying out the present invention, which are imposed on the embodiment which will be described below, are not intended to limit the scope of the present invention to the following embodiment and illustrated examples.

First, an outline of a vehicle seat 1 of the present embodiment will be described.

The vehicle seat 1 is an electrically powered sliding seat including an electrically powered slide rail.

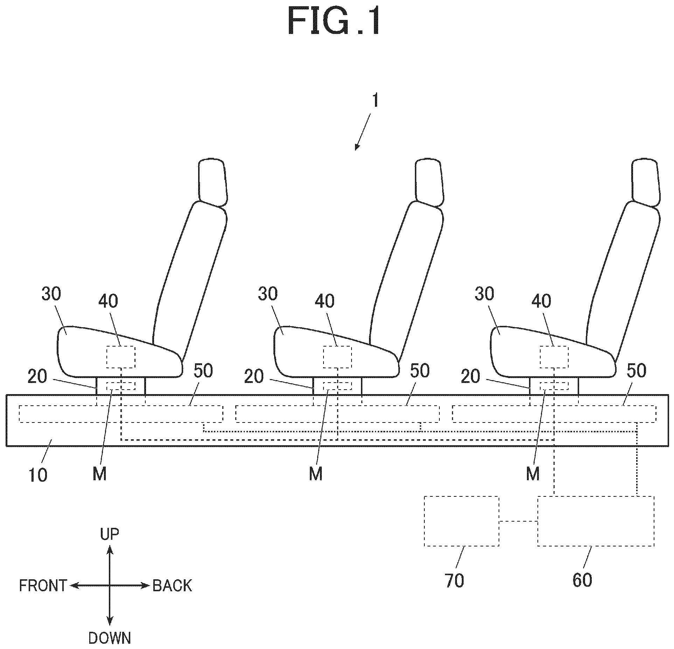

As illustrated in FIG. 1, for example, the vehicle seat 1 includes a lower rail 10 and an upper rail 20 (21, 22, 23) that moves along the lower rail 10. A seat 30 (31, 32, 33) is coupled to the upper rail 20. A drive M located in the upper rail 20 is driven to move the upper rail 20 along the lower rail 10, thereby sliding the seat 30 back and forth. Herein, three-row seats having a front seat, a middle seat, and a rear seat are illustrated as an example.

The seat 30 is provided with an electric component 40 such as a heater, a sliding seat operation switch, or the like and includes a power feeder 50 (51, 52, 53, 56, 57, 58) that feeds power to the electric component 40 and the drive M of the electrically powered slide rail.

The electric component 40 (the drive M) and the power feeder 50 are connected to a power source 70 via a control device 60 through predetermined wires. The electric component 40 (the drive M) and the power feeder 50 are also connected electrically via a wire.

The control device 60 and the power source 70 are provided in a vehicle floor, for example, and the lower rail 10 is provided on the vehicle floor.

Note that configurations and operations of the drive M of the electrically powered slide rail and a drive mechanism thereof, which are similar to those of Patent Document 1 above (WO 2020/141600), are such that the electric motor (the drive M) located in the upper rail 20 rotates screw members engaged with a plurality of engaging holes provided in the lower rail 10 to be screwed forward and backward, thereby moving the upper rail 20 along the lower rail 10, which will not be described herein in detail.

### [Power Feeders]

Next, power feeders that respectively supply power to a plurality of seats included in the vehicle seat 1 of the present embodiment will be described.

### (First Embodiment)

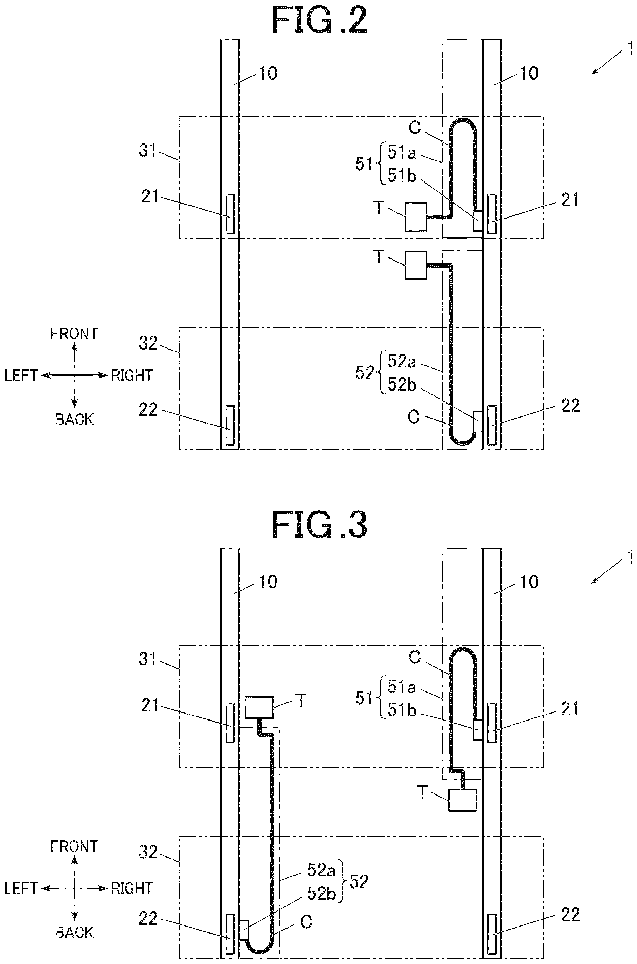

As illustrated in FIG. 2, for example, the vehicle seat 1 includes a pair of lower rails 10 arranged in parallel to each other as well as first upper rails 21 and second upper rails 22. Each first upper rail 21 and second upper rail 22 is arranged on a lower rail 10 which is each of the pair of lower rails 10 to be aligned in the longitudinal direction of the lower rail 10 and are movable along the lower rail 10. A first seat 31 is coupled to the first upper rails 21 arranged closer to the front of the lower rails 10, and a second seat 32 is coupled to the second upper rails 22 arranged closer to the back of the lower rails 10.

The drives M (see FIG. 1) are located in the first upper rails 21 and the second upper rails 22.

The first seat 31 and the second seat 32 are each arranged to straddle the pair of left and right lower rails 10. A pair of left and right upper rails 21 are coupled to the first seat 31, and a pair of left and right upper rails 22 are coupled to the second seat 32.

That is, the first seat 31 and the second seat 32 are each provided to be slidable back and forth in the longitudinal direction of the pair of left and right lower rails 10.

Herein, two-row seats having the first seat 31 as a front seat and the second seat 32 as a rear seat are illustrated as an example.

Note that the first seat 31 and the second seat 32 may be seats in two rows of the three-row seats illustrated in FIG. 1.

This vehicle seat 1 includes a first power feeder 51 that feeds power to the electric component (the electric component 40; see FIG. 1) provided for the first seat 31 and a second power feeder 52 that feeds power to the electric component (the electric component 40; see FIG. 1) provided for the second seat 32.

The first power feeder 51 also feeds power to the drives M that slide the first seat 31 (the first upper rails 21), and the second power feeder 52 also feeds power to the drives M that slide the second seat 32 (the second upper rails 22).

The first power feeder 51 and the second power feeder 52 are arranged to extend in an orientation in the longitudinal direction of the lower rail 10.

The first power feeder 51 and the second power feeder 52 of the vehicle seat 1 illustrated in FIG. 2 are located on an identical side of the lower rail 10 which is one of the pair of lower rails 10. The first power feeder 51 and the second power feeder 52 are located between the pair of lower rails 10.

Herein, the first power feeder 51 and the second power feeder 52 are located along a left side surface of the lower rail 10 on the right side in the drawing.

In the vehicle seat 1 illustrated in FIG. 2, the first power feeder 51 is located at a position closer to a front end of the lower rail 10, and the second power feeder 52 is located at a position closer to a back end of the lower rail 10. A back end of the first power feeder 51 and a front end of the second power feeder 52 are arranged to be opposed to each other.

The first power feeder 51 has a first power feeding rail 51a and a first mover 51b that moves along the first power feeding rail 51a. The first power feeding rail 51a is arranged to extend in the orientation in the longitudinal direction of the lower rail 10.

The first mover 51b is configured to move following or in conjunction with the first seat 31 (the first upper rails 21) that moves in the front-back direction.

This first mover 51b is connected to one end of a flexible flat cable C, and a terminal T connected to the other end of the flexible flat cable C is connected to the control device 60 and the power source 70 (see FIG. 1) through predetermined wires.

Since the first mover 51b of the first power feeder 51 can move in the front-back direction in accordance with the sliding of the first seat 31 (the first upper rails 21), the first power feeder 51 can suitably feed power to the electric component (40) provided for the first seat 31 and the drives M that slide the first seat 31 (the first upper rails 21).

Note that the flexible flat cable C is a flat electric cable having flexibility, which is a cable deformable to expand and contract in accordance with the movement of the first mover 51b.

The second power feeder 52 has a second power feeding rail 52a and a second mover 52b that moves along the second power feeding rail 52a. The second power feeding rail 52a is arranged to extend in the orientation in the longitudinal direction of the lower rail 10.

The second mover 52b is configured to move following or in conjunction with the second seat 32 (the second upper rails 22) that moves in the front-back direction.

This second mover 52b is connected to one end of a flexible flat cable C, and a terminal T connected to the other end of the flexible flat cable C is connected to the control device 60 and the power source 70 (see FIG. 1) through predetermined wires.

Since the second mover 52b of the second power feeder 52 can move in the front-back direction in accordance with the sliding of the second seat 32 (the second upper rails 22), the second power feeder 52 can suitably feed power to the electric component (40) provided for the second seat 32 and the drives M that slide the second seat 32 (the second upper rails 22).

Note that the flexible flat cable C is a flat electric cable having flexibility, which is a cable deformable to expand and contract in accordance with the movement of the second mover 52b.

Note that the first power feeder 51 and the second power feeder 52 are power feeders in which the flexible flat cable disclosed in Patent Document 2 above (JP 2020-32862 A) is used and are not described herein in detail.

As described, the vehicle seat 1 including the first seat 31 and the second seat 32 that individually slide along the lower rails 10 includes separately the first power feeder 51 that feeds power to the electric component (40) provided for the first seat 31 and the second power feeder 52 that feeds power to the electric component (40) provided for the second seat 32, and can thus supply power suitably to the first seat 31 and the second seat 32.

In the vehicle seat 1 illustrated in FIG. 2, the first power feeder 51 and the second power feeder 52 are located on the identical side of the lower rail 10 which is one of the pair of lower rails 10, and there is no need to arrange any power feeder on the opposite side of the lower rail 10. Thus, the two power feeders can be arranged to have a relatively compact layout in a concentrated manner.

In the vehicle seat 1 illustrated in FIG. 2, the first power feeder 51 and the second power feeder 52 are located between the pair of lower rails 10, and there is no need to arrange any power feeder outside the pair of lower rails 10. Thus, the two power feeders can be arranged to have a relatively compact layout in the concentrated manner.

In the vehicle seat 1 illustrated in FIG. 2, the first power feeder 51 and the second power feeder 52 are located adjacent to the lower rail 10 which is one of the pair of lower rails 10. Thus, the two power feeders can be arranged to have a relatively compact layout in the concentrated manner.

In the vehicle seat 1 illustrated in FIG. 2, the first power feeder 51 and the second power feeder 52 are located with the back end of the first power feeder 51 (the first power feeding rail 51a) and the front end of the second power feeder 52 (the second power feeding rail 52a) opposed to each other and with their longitudinal direction aligned. Thus, the two power feeders can be arranged to have a relatively compact layout in the manner concentrated in the width direction of the vehicle seat 1.

In the vehicle seat 1 illustrated in FIG. 2, the terminal T of the first power feeder 51 and the terminal T of the second power feeder 52 can be arranged to be close to a central side of the vehicle seat 1.

### (Second Embodiment)

Next, a second embodiment of the vehicle seat according to the present invention will be described. Note that portions identical to those of the first embodiment are denoted by the same reference characters, and description will be provided only for different portions.

The first power feeder 51 and the second power feeder 52 of the vehicle seat 1 illustrated in FIG. 3 are located on an identical side of the lower rail 10 which is one of the pair of lower rails 10. The first power feeder 51 and the second power feeder 52 are located between the pair of lower rails 10.

Specifically, the first power feeder 51 is located at a position adjacent to the lower rail 10 which is one of the pair of lower rails 10, and the second power feeder 52 is located at a position adjacent to the other lower rail 10 of the pair of lower rails 10.

Herein, the first power feeder 51 and the second power feeder 52 are located on the left of the lower rail 10 on the right side in the drawing. The first power feeder 51 is located along the left side surface of the lower rail 10 on the right side in the drawing, and the second power feeder 52 is located along the right side surface of the lower rail 10 on the left side in the drawing.

In the vehicle seat 1 illustrated in FIG. 3, the first power feeder 51 is located at a position closer to the front end of the lower rail 10, and the second power feeder 52 is located at a position closer to the back end of the lower rail 10. Part of the first power feeder 51 on the back end side and part of the second power feeder 52 on the front end side are overlapped laterally.

For example, in a case in which movable ranges of the first seat 31 and the second seat 32 are overlapped, power is fed to each of the seats with the first power feeder 51 and the second power feeder 52 partially overlapped.

This can prevent interference between the first power feeder 51 and the second power feeder 52.

Even when the first power feeder 51 and the second power feeder 52 are arranged in the vehicle seat 1 as illustrated in FIG. 3, power can be supplied suitably to the first seat 31 and the second seat 32.

In the vehicle seat 1 illustrated in FIG. 3, the first power feeder 51 and the second power feeder 52 are located on the identical side of the lower rail 10 which is one of the pair of lower rails 10, and there is no need to arrange any power feeder on the opposite side of the lower rail 10. Thus, the two power feeders can be arranged to have a relatively compact layout in the concentrated manner.

In the vehicle seat 1 illustrated in FIG. 3, the first power feeder 51 and the second power feeder 52 are located between the pair of lower rails 10, and there is no need to arrange any power feeder outside the pair of lower rails 10. Thus, the two power feeders can be arranged to have a relatively compact layout in the concentrated manner.

In the vehicle seat 1 illustrated in FIG. 3, the first power feeder 51 is located at a position adjacent to the lower rail 10 on the right side in the drawing, and the second power feeder 52 is located at a position adjacent to the lower rail 10 on the left side in the drawing. Thus, space can be ensured between the pair of lower rails 10.

### (Third Embodiment)

Next, a third embodiment of the vehicle seat according to the present invention will be described. Note that portions identical to those of the first embodiment are denoted by the same reference characters, and description will be provided only for different portions.

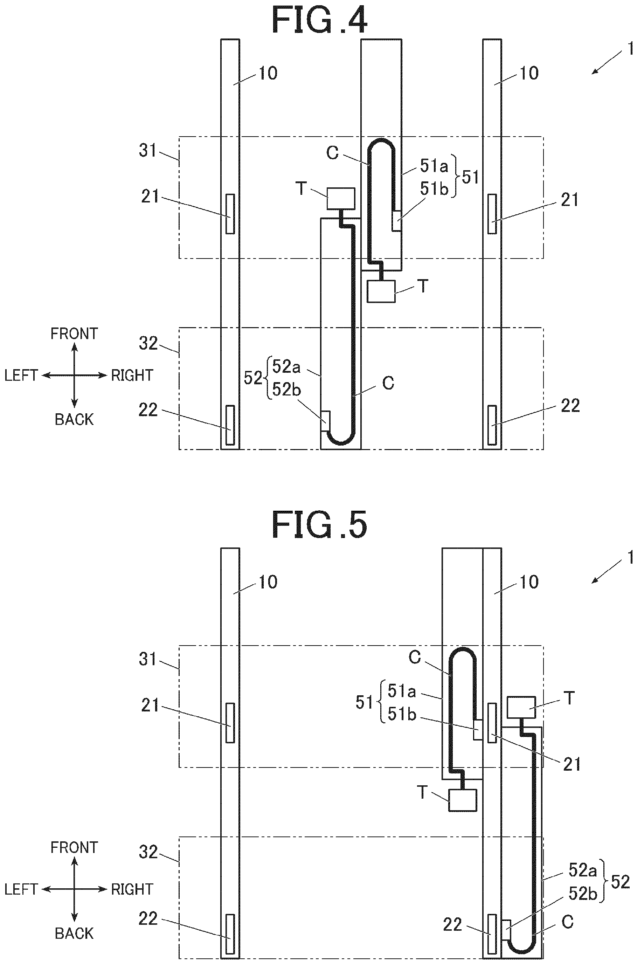

The first power feeder 51 and the second power feeder 52 of the vehicle seat 1 illustrated in FIG. 4 are located on an identical side of the lower rail 10 which is one of the pair of lower rails 10. The first power feeder 51 and the second power feeder 52 are located between the pair of lower rails 10.

Specifically, the first power feeder 51 and the second power feeder 52 are located at positions between the pair of lower rails 10 and away from each of the lower rails 10.

Herein, the first power feeder 51 and the second power feeder 52 are located on the left of the lower rail 10 on the right side in the drawing and are located on a substantially central side between the pair of lower rails 10.

In the vehicle seat 1 illustrated in FIG. 4, the first power feeder 51 is located at a position closer to the front end of the lower rail 10, and the second power feeder 52 is located at a position closer to the back end of the lower rail 10. Part of the first power feeder 51 on the back end side and part of the second power feeder 52 on the front end side are overlapped laterally.

For example, in the case in which the movable ranges of the first seat 31 and the second seat 32 are overlapped, power is fed to each of the seats with the first power feeder 51 and the second power feeder 52 partially overlapped.

This can prevent interference between the first power feeder 51 and the second power feeder 52.

Even when the first power feeder 51 and the second power feeder 52 in the vehicle seat 1 are arranged as illustrated in FIG. 4, power can be supplied suitably to the first seat 31 and the second seat 32.

In the vehicle seat 1 illustrated in FIG. 4, the first power feeder 51 and the second power feeder 52 are located on the identical side of the lower rail 10 which is one of the pair of lower rails 10, and there is no need to arrange any power feeder on the opposite side of the lower rail 10. Thus, the two power feeders can be arranged to have a relatively compact layout in the concentrated manner.

In the vehicle seat 1 illustrated in FIG. 4, the first power feeder 51 and the second power feeder 52 are located between the pair of lower rails 10, and there is no need to arrange any power feeder outside the pair of lower rails 10. Thus, the two power feeders can be arranged to have a relatively compact layout in the concentrated manner.

In the vehicle seat 1 illustrated in FIG. 4, the first power feeder 51 and the second power feeder 52 are located closer to the center between the pair of lower rails 10. Thus, the two power feeders can be arranged to have a relatively compact layout in the concentrated manner.

### (Fourth Embodiment)

Next, a fourth embodiment of the vehicle seat according to the present invention will be described. Note that portions identical to those of the first embodiment are denoted by the same reference characters, and description will be provided only for different portions.

The first power feeder 51 and the second power feeder 52 of the vehicle seat 1 illustrated in FIG. 5 are located at positions at which the lower rail 10 which is one of the pair of lower rails 10 is sandwiched between the first power feeder 51 and the second power feeder 52.

Specifically, the first power feeder 51 is located at a position adjacent to one side surface of the lower rail 10 which is one of the pair of lower rails 10, and the second power feeder 52 is located at a position adjacent to the other side surface of the lower rail 10 which is one of the pair of lower rails 10.

Herein, the first power feeder 51 is located along the left side surface of the lower rail 10 on the right side in the drawing, and the second power feeder 52 is located along the right side surface of the lower rail 10 on the right side in the drawing.

In the vehicle seat 1 illustrated in FIG. 5, the first power feeder 51 is located at a position closer to the front end of the lower rail 10, and the second power feeder 52 is located at a position closer to the back end of the lower rail 10. Part of the first power feeder 51 on the back end side and part of the second power feeder 52 on the front end side are overlapped laterally.

For example, in the case in which the movable ranges of the first seat 31 and the second seat 32 are overlapped, power is fed to each of the seats with the first power feeder 51 and the second power feeder 52 partially overlapped.

Even when the first power feeder 51 and the second power feeder 52 in the vehicle seat 1 are arranged as illustrated in FIG. 5, power can be supplied suitably to the first seat 31 and the second seat 32.

In the vehicle seat 1 illustrated in FIG. 5, the first power feeder 51 and the second power feeder 52 are located to sandwich the lower rail 10 which is one of the pair of lower rails 10 and to be adjacent to the lower rail 10. Thus, the two power feeders can be arranged to have a relatively compact layout in the concentrated manner.

### (Fifth Embodiment)

Next, a fifth embodiment of the vehicle seat according to the present invention will be described. Note that portions identical to those of the first embodiment are denoted by the same reference characters, and description will be provided only for different portions.

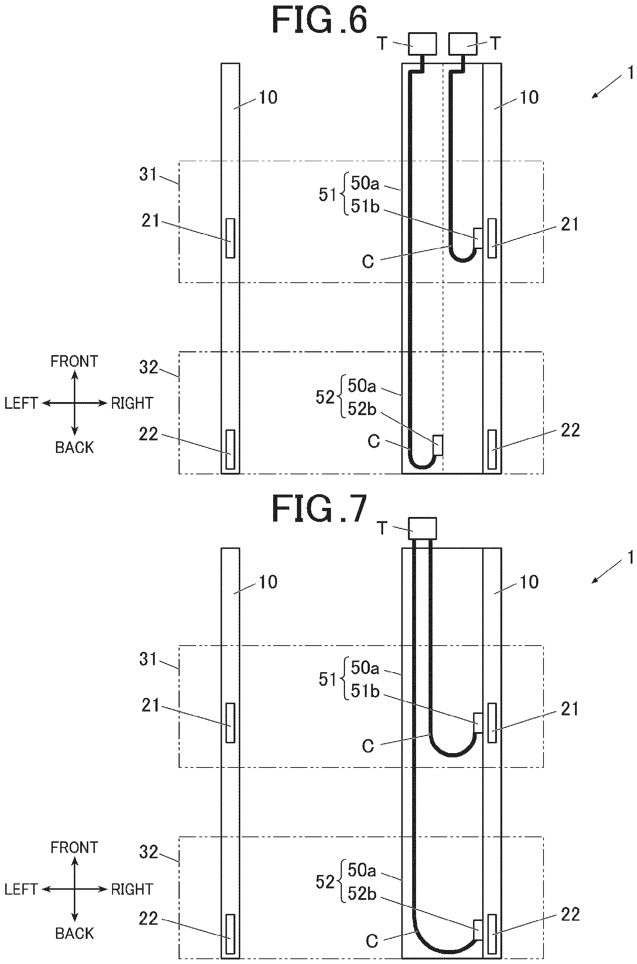

The first power feeder 51 and the second power feeder 52 of the vehicle seat 1 illustrated in FIG. 6 are located on an identical side of the lower rail 10 which is one of the pair of lower rails 10. The first power feeder 51 and the second power feeder 52 are located between the pair of lower rails 10.

The first power feeder 51 and the second power feeder 52 of the fifth embodiment include a common power feeding rail 50a. The first power feeder 51 has the first mover 51b that moves along the common power feeding rail 50a, and the second power feeder 52 has the second mover 52b that moves along the common power feeding rail 50a.

The first power feeder 51 and the second power feeder 52 herein are located on the left of the lower rail 10 on the right side in the drawing. The power feeding rail 50a shared by the first power feeder 51 and the second power feeder 52 is arranged to extend in the orientation in the longitudinal direction of the lower rail 10 along the left side surface of the lower rail 10 on the right side in the drawing.

The first mover 51b of the first power feeder 51 is connected to one end of the flexible flat cable C housed in a right region of the common power feeding rail 50a. The first mover 51b is movable in the orientation in the longitudinal direction of the lower rail 10 in the right region of the power feeding rail 50a.

The second mover 52b of the second power feeder 52 is connected to one end of the flexible flat cable C housed in a left region of the common power feeding rail 50a. The second mover 52b is movable in the orientation in the longitudinal direction of the lower rail 10 in the left region of the power feeding rail 50a.

Even when the first power feeder 51 and the second power feeder 52 in the vehicle seat 1 are arranged as illustrated in FIG. 6, power can be supplied suitably to the first seat 31 and the second seat 32.

The first power feeder 51 and the second power feeder 52 including the common power feeding rail 50a as described can be arranged to have a relatively compact layout in such a manner that the two power feeders are concentrated.

Since the first power feeder 51 and the second power feeder 52 share the power feeding rail 50a, the number of components can be reduced.

In the vehicle seat 1 illustrated in FIG. 6, the terminal T of the first power feeder 51 and the terminal T of the second power feeder 52 can be arranged in the manner concentrated on the front side of the vehicle seat 1.

### (Sixth Embodiment)

Next, a sixth embodiment of the vehicle seat according to the present invention will be described. Note that portions identical to those of the first embodiment are denoted by the same reference characters, and description will be provided only for different portions.

The first power feeder 51 and the second power feeder 52 of the vehicle seat 1 illustrated in FIG. 7 are located on an identical side of the lower rail 10 which is one of the pair of lower rails 10. The first power feeder 51 and the second power feeder 52 are located between the pair of lower rails 10.

The first power feeder 51 and the second power feeder 52 of the sixth embodiment include the common power feeding rail 50a. The first power feeder 51 has the first mover 51b that moves along the common power feeding rail 50a, and the second power feeder 52 has the second mover 52b that moves along the common power feeding rail 50a.

The first power feeder 51 and the second power feeder 52 herein are located on the left of the lower rail 10 on the right side in the drawing, and the power feeding rail 50a shared by the first power feeder 51 and the second power feeder 52 is arranged to extend in the orientation in the longitudinal direction of the lower rail 10 along the left side surface of the lower rail 10 on the right side in the drawing.

The first mover 51b of the first power feeder 51 is connected to one end of the flexible flat cable C housed in a front region of the common power feeding rail 50a. The first mover 51b is movable in the orientation in the longitudinal direction of the lower rail 10 in the front region of the power feeding rail 50a.

The second mover 52b of the second power feeder 52 is connected to one end of the flexible flat cable C housed in a back side region of the common power feeding rail 50a. The second mover 52b is movable in the orientation in the longitudinal direction of the lower rail 10 in the back side region of the power feeding rail 50a.

Even when the first power feeder 51 and the second power feeder 52 in the vehicle seat 1 are arranged as illustrated in FIG. 7, power can be supplied suitably to the first seat 31 and the second seat 32.

The first power feeder 51 and the second power feeder 52 including the common power feeding rail 50a as described can be arranged to have a relatively compact layout in such a manner that the two power feeders are concentrated.

Since the first power feeder 51 and the second power feeder 52 share the power feeding rail 50a, the number of components can be reduced.

In the vehicle seat 1 illustrated in FIG. 7, the terminal T of the first power feeder 51 and the terminal T of the second power feeder 52 can be arranged in the manner concentrated on the front side of the vehicle seat 1.

### (Seventh Embodiment)

Next, a seventh embodiment of the vehicle seat according to the present invention will be described. Note that portions identical to those of the first embodiment are denoted by the same reference characters, and description will be provided only for different portions.

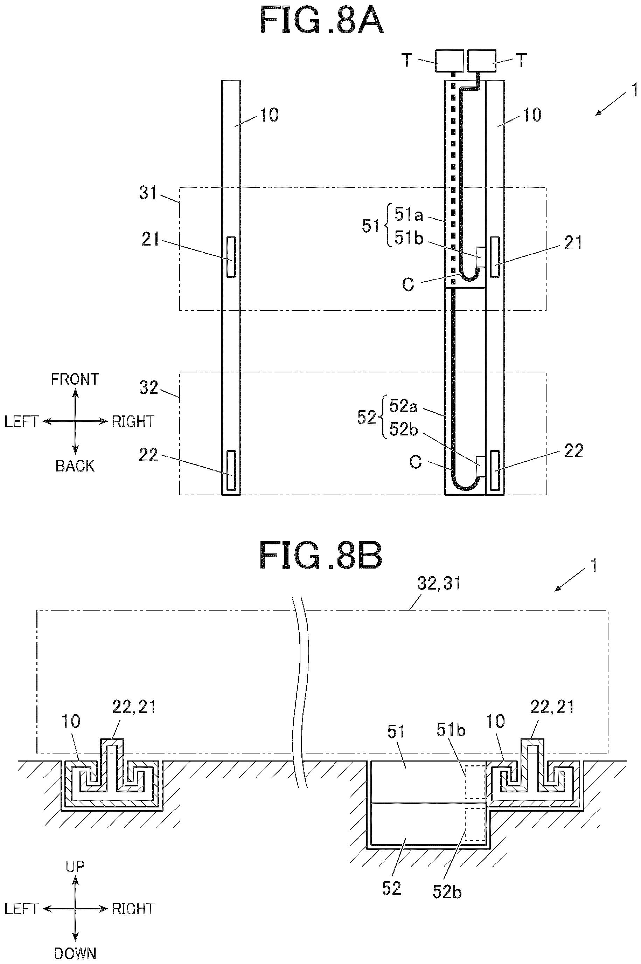

The first power feeder 51 and the second power feeder 52 of the vehicle seat 1 illustrated in FIG. 8A and FIG. 8B are located on an identical side of the lower rail 10 which is one of the pair of lower rails 10. The first power feeder 51 and the second power feeder 52 are located between the pair of lower rails 10.

The first power feeder 51 and the second power feeder 52 herein are located on the left of the lower rail 10 on the right side in the drawing. The first power feeder 51 and the second power feeder 52 are located along the left side surface of the lower rail 10 on the right side in the drawing.

In particular, in the vehicle seat 1 illustrated in FIG. 8A and FIG. 8B, the first power feeder 51 is located at a position closer to the front end of the lower rail 10. The second power feeder 52 is located at a position closer to the back end of the lower rail 10. At least part of the first power feeder 51 and part of the second power feeder 52 on the front end side are overlapped vertically.

Herein, the second power feeder 52 and the first power feeder 51 are overlapped vertically with the first power feeder 51 located in a manner overlapped on the second power feeder 52.

Even when the first power feeder 51 and the second power feeder 52 in the vehicle seat 1 are arranged as illustrated in FIG. 8A and FIG. 8B, power can be supplied suitably to the first seat 31 and the second seat 32.

In the vehicle seat 1 illustrated in FIG. 8A and FIG. 8B, the first power feeder 51 and the second power feeder 52 are located to be at least partially overlapped vertically. Thus, the two power feeders can be arranged to have a relatively compact layout in the manner concentrated in the width direction of the vehicle seat 1.

In the vehicle seat 1 illustrated in FIG. 8A and FIG. 8B, the terminal T of the first power feeder 51 and the terminal T of the second power feeder 52 can be arranged in the manner concentrated on the front side of the vehicle seat 1.

### (Eighth Embodiment)

Next, an eighth embodiment of the vehicle seat according to the present invention will be described. Note that portions identical to those of the first and second embodiments are denoted by the same reference characters, and description will be provided only for different portions.

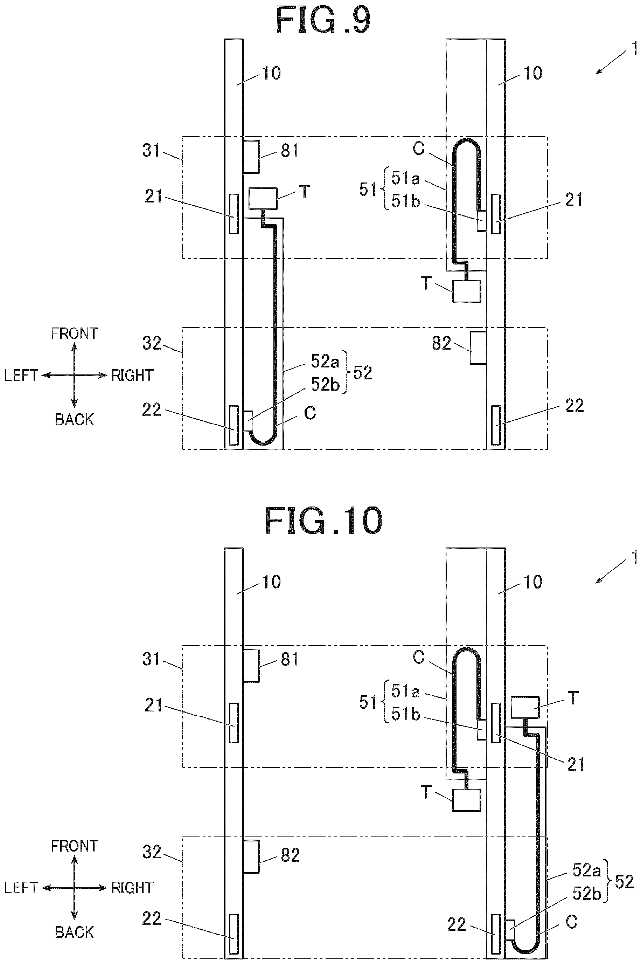

The vehicle seat 1 illustrated in FIG. 9 includes sensors for detecting the positions of the first seat 31 and the second seat 32 that slide back and forth in the longitudinal direction of the lower rails 10. Herein, a configuration in which the seat detection sensors are located in the vehicle seat 1 of the second embodiment (see FIG. 3) is illustrated.

Specifically, a first seat detection sensor 81 that detects the position of the first seat 31 is located in a front half area of the lower rail 10 on the left side in the drawing, and a second seat detection sensor 82 that detects the position of the second seat 32 is located in a back half area of the lower rail 10 on the right side in the drawing.

The first seat detection sensor 81 and the second seat detection sensor 82 are each connected to the control device 60 and the power source 70 (see FIG. 1) through predetermined wires.

The first seat detection sensor 81 detects the position of the first seat 31 on the lower rails 10 and outputs information on the position to the control device 60.

The second seat detection sensor 82 detects the position of the second seat 32 on the lower rails 10 and outputs information on the position to the control device 60.

The vehicle seat 1 including such seat detection sensors (81, 82) can execute various types of control in accordance with the position of the first seat 31 or the second seat 32 having been slid.

### (Ninth Embodiment)

Next, a ninth embodiment of the vehicle seat according to the present invention will be described. Note that portions identical to those of the first and fourth embodiments are denoted by the same reference characters, and description will be provided only for different portions.

The vehicle seat 1 illustrated in FIG. 10 includes sensors for detecting the positions of the first seat 31 and the second seat 32 that slide back and forth in the longitudinal direction of the lower rails 10. Herein, a configuration in which the seat detection sensors are located in the vehicle seat 1 of the fourth embodiment (see FIG. 5) is illustrated.

Specifically, the first seat detection sensor 81 that detects the position of the first seat 31 is located in the front half area of the lower rail 10 on the left side in the drawing, and the second seat detection sensor 82 that detects the position of the second seat 32 is located in the back half area of the lower rail 10 on the left side in the drawing.

The first seat detection sensor 81 and the second seat detection sensor 82 are each connected to the control device 60 and the power source 70 (see FIG. 1) through predetermined wires.

The first seat detection sensor 81 detects the position of the first seat 31 on the lower rails 10 and outputs information on the position to the control device 60.

The second seat detection sensor 82 detects the position of the second seat 32 on the lower rails 10 and outputs information on the position to the control device 60.

The vehicle seat 1 including such seat detection sensors (81, 82) can execute various types of control in accordance with the position of the first seat 31 or the second seat 32 having been slid.

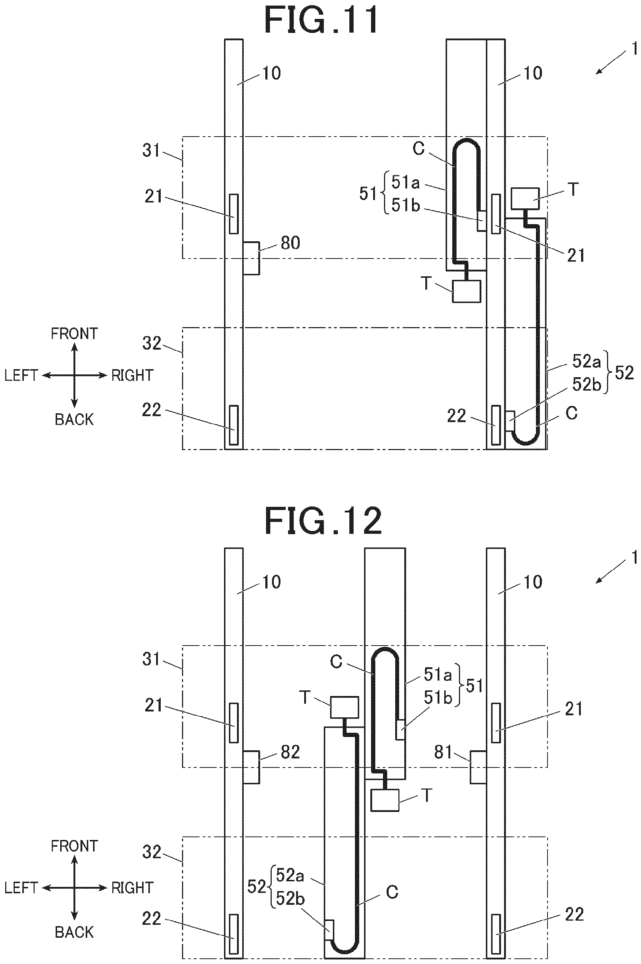

Note that as illustrated in FIG. 11, the vehicle seat 1 may be configured to include a seat detection sensor 80 capable of detecting each of the position of the first seat 31 and the position of the second seat 32.

The seat detection sensor 80 is provided on a substantially central side in the longitudinal direction of the lower rail 10 on the left side in the drawing and at a location where the movable ranges of the first seat 31 and the second seat 32 are overlapped.

The seat detection sensor 80 is connected to the control device 60 and the power source 70 (see FIG. 1) through predetermined wires.

This seat detection sensor 80 combines the functions of the first seat detection sensor 81 and the second seat detection sensor 82 and has the function of detecting each of the position of the first seat 31 and the position of the second seat 32 on the lower rails 10 and outputting information on the positions to the control device 60.

The vehicle seat 1 including such seat detection sensor 80 can execute various types of control in accordance with the position of the first seat 31 or the second seat 32 having been slid.

### (Tenth Embodiment)

Next, a tenth embodiment of the vehicle seat according to the present invention will be described. Note that portions identical to those of the first and third embodiments are denoted by the same reference characters, and description will be provided only for different portions.

The vehicle seat 1 illustrated in FIG. 12 includes sensors for detecting the positions of the first seat 31 and the second seat 32 that slide back and forth in the longitudinal direction of the lower rails 10. Herein, a configuration in which the seat detection sensors are located in the vehicle seat 1 of the third embodiment (see FIG. 4) is illustrated.

Specifically, the first seat detection sensor 81 that detects the position of the first seat 31 is located at a position on a substantially central side in the longitudinal direction of the lower rail 10 on the right side in the drawing, and the second seat detection sensor 82 that detects the position of the second seat 32 is located at a position on a substantially central side in the longitudinal direction of the lower rail 10 on the left side in the drawing.

The first seat detection sensor 81 and the second seat detection sensor 82 are provided at locations where the movable ranges of the first seat 31 and the second seat 32 are overlapped.

The first seat detection sensor 81 and the second seat detection sensor 82 are each connected to the control device 60 and the power source 70 (see FIG. 1) through predetermined wires.

The first seat detection sensor 81 detects the position of the first seat 31 on the lower rails 10 and outputs information on the position to the control device 60.

The second seat detection sensor 82 detects the position of the second seat 32 on the lower rails 10 and outputs information on the position to the control device 60.

The vehicle seat 1 including such seat detection sensors (81, 82) can execute various types of control in accordance with the position of the first seat 31 or the second seat 32 having been slid.

### (Eleventh Embodiment)

Next, an eleventh embodiment of the vehicle seat according to the present invention will be described. Note that portions identical to those of the first embodiment are denoted by the same reference characters, and description will be provided only for different portions.

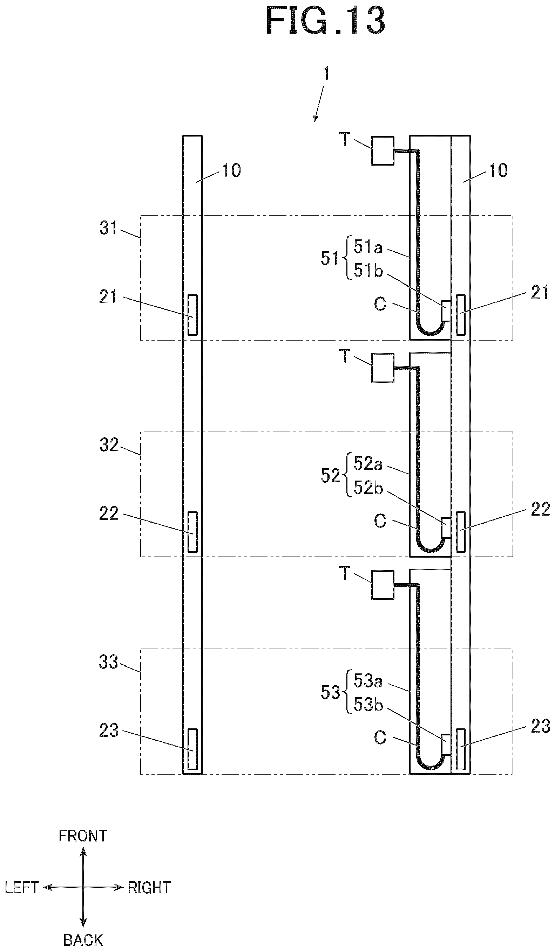

The vehicle seat 1 illustrated in FIG. 13 includes three-row seats having the first seat 31 as a front seat, the second seat 32 as a middle seat, and a third seat 33 as a rear seat.

This vehicle seat 1 includes the first power feeder 51 that feeds power to an electric component (the electric component 40; see FIG. 1) provided for the first seat 31, the second power feeder 52 that feeds power to an electric component (the electric component 40; see FIG. 1) provided for the second seat 32, and a third power feeder 53 that feeds power to an electric component (the electric component 40; see FIG. 1) provided for the third seat 33.

The third power feeder 53 is a power feeder similar to the first power feeder 51 and the second power feeder 52 and is thus not described in detail.

Note that the respective power feeders also feed power to the drives M that slide the respective seats (upper rails).

The first power feeder 51, the second power feeder 52, and the third power feeder 53 of the vehicle seat 1 illustrated in FIG. 13 are located on an identical side of the lower rail 10 which is one of the pair of lower rails 10. The first power feeder 51, the second power feeder 52, and the third power feeder 53 are located between the pair of lower rails 10.

Herein, the first power feeder 51, the second power feeder 52, and the third power feeder 53 are located along the left side surface of the lower rail 10 on the right side in the drawing.

The first power feeder 51, the second power feeder 52, and the third power feeder 53 are located with the front end and the back end of adjacent ones of the power feeders opposed to each other and with their longitudinal direction aligned.

By arranging the first power feeder 51, the second power feeder 52, and the third power feeder 53 in the vehicle seat 1 as illustrated in FIG. 13, power can be supplied suitably to the first seat 31, the second seat 32, and the third seat 53.

### (Twelfth Embodiment)

Next, a twelfth embodiment of the vehicle seat according to the present invention will be described. Note that portions identical to those of the first embodiment are denoted by the same reference characters, and description will be provided only for different portions.

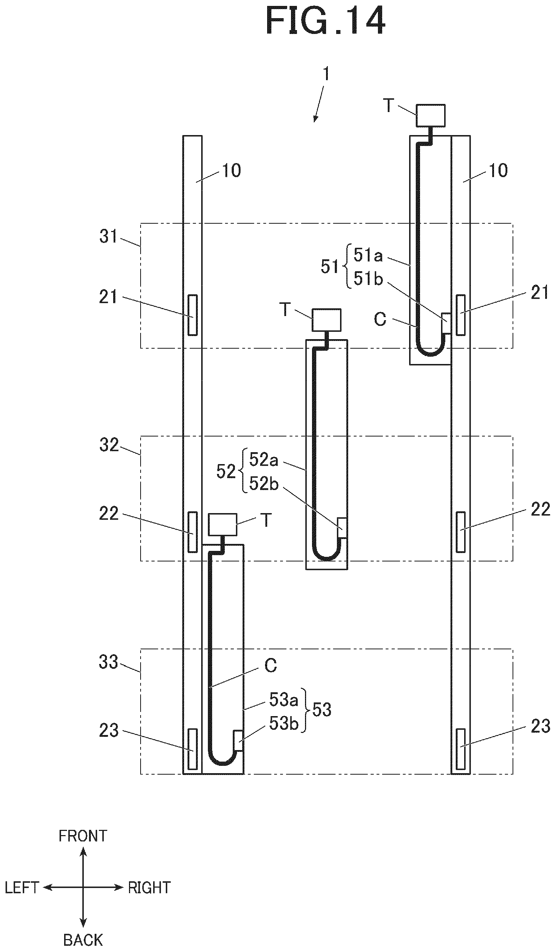

The vehicle seat 1 illustrated in FIG. 14 includes three-row seats having the first seat 31 as a front seat, the second seat 32 as a middle seat, and the third seat 33 as a rear seat.

This vehicle seat 1 includes the first power feeder 51 that feeds power to an electric component (the electric component 40; see FIG. 1) provided for the first seat 31, the second power feeder 52 that feeds power to an electric component (the electric component 40; see FIG. 1) provided for the second seat 32, and the third power feeder 53 that feeds power to an electric component (the electric component 40; see FIG. 1) provided for the third seat 33.

Note that the respective power feeders also feed power to the drives M that slide the respective seats (upper rails).

The first power feeder 51, the second power feeder 52, and the third power feeder 53 of the vehicle seat 1 illustrated in FIG. 14 are located on an identical side of the lower rail 10 which is one of the pair of lower rails 10. The first power feeder 51, the second power feeder 52, and the third power feeder 53 are located between the pair of lower rails 10.

Herein, the first power feeder 51 is located along the left side surface of the lower rail 10 on the right side in the drawing. The third power feeder 53 is located along the right side surface of the lower rail 10 on the left side in the drawing. The second power feeder 52 is located at a position between the lower rails 10 on the left and right in the drawing and away from each of the lower rails 10.

A back end portion of the first power feeder 51 and a front end portion of the second power feeder 52 are partially overlapped laterally, and a back end portion of the second power feeder 52 and a front end portion of the third power feeder 53 are partially overlapped laterally.

Even when the first power feeder 51, the second power feeder 52, and the third power feeder 53 in the vehicle seat 1 are arranged as illustrated in FIG. 14, power can be supplied suitably to the first seat 31, the second seat 32, and the third seat 53.

### (Thirteenth Embodiment)

Next, a thirteenth embodiment of the vehicle seat according to the present invention will be described. Note that portions identical to those of the first and fifth embodiments are denoted by the same reference characters, and description will be provided only for different portions.

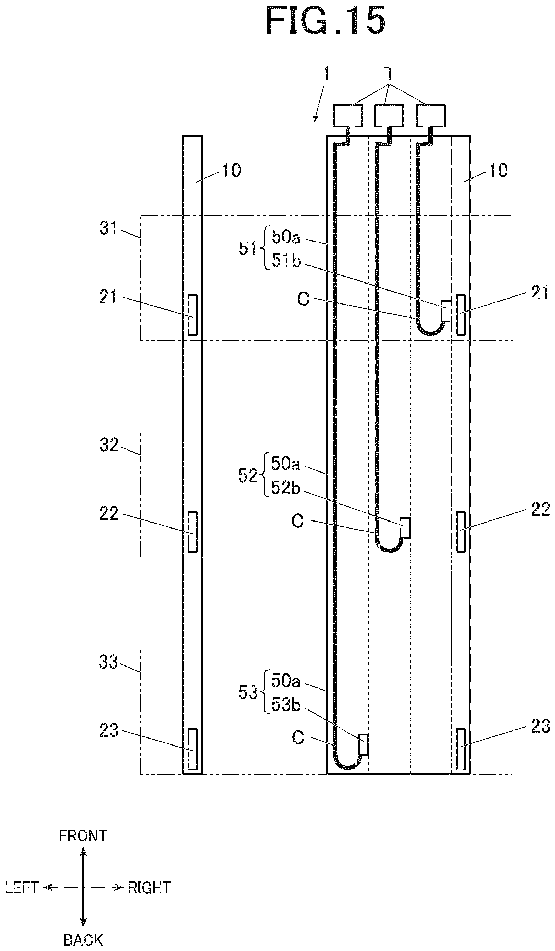

The vehicle seat 1 illustrated in FIG. 15 includes three-row seats having the first seat 31 as a front seat, the second seat 32 as a middle seat, and the third seat 33 as a rear seat.

This vehicle seat 1 includes the first power feeder 51 that feeds power to an electric component (the electric component 40; see FIG. 1) provided for the first seat 31, the second power feeder 52 that feeds power to an electric component (the electric component 40; see FIG. 1) provided for the second seat 32, and the third power feeder 53 that feeds power to an electric component (the electric component 40; see FIG. 1) provided for the third seat 33.

The first power feeder 51, the second power feeder 52, and the third power feeder 53 of the vehicle seat 1 illustrated in FIG. 15 are located on an identical side of the lower rail 10 which is one of the pair of lower rails 10. The first power feeder 51, the second power feeder 52, and the third power feeder 53 are located between the pair of lower rails 10.

The first power feeder 51, the second power feeder 52, and the third power feeder 53 of the thirteenth embodiment includes the common power feeding rail 50a. The first power feeder 51 has the first mover 51b that moves along the common power feeding rail 50a. The second power feeder 52 has the second mover 52b that moves along the common power feeding rail 50a. The third power feeder 53 has a third mover 53b that moves along the common power feeding rail 50a.

The first power feeder 51, the second power feeder 52, and the third power feeder 53 herein are located on the left of the lower rail 10 on the right side in the drawing. The power feeding rail 50a shared by the first power feeder 51, the second power feeder 52, and the third power feeder 53 is arranged to extend along the left side surface of the lower rail 10 on the right side in the drawing in the orientation in the longitudinal direction of the lower rail 10.

The first mover 51b of the first power feeder 51 is connected to one end of the flexible flat cable C housed in a right region of the common power feeding rail 50a. The first mover 51b is movable in the orientation in the longitudinal direction of the lower rail 10 in the right region of the power feeding rail 50a.

The second mover 52b of the second power feeder 52 is connected to one end of the flexible flat cable C housed in a middle region of the common power feeding rail 50a. The second mover 52b is movable in the orientation in the longitudinal direction of the lower rail 10 in the middle region of the power feeding rail 50a.

The third mover 53b of the third power feeder 53 is connected to one end of the flexible flat cable C housed in a left region of the common power feeding rail 50a. The third mover 53b is movable in the orientation in the longitudinal direction of the lower rail 10 in the left region of the power feeding rail 50a.

Even when the first power feeder 51, the second power feeder 52, and the third power feeder 53 in the vehicle seat 1 are arranged as illustrated in FIG. 15, power can be supplied suitably to the first seat 31, the second seat 32, and the third seat 53.

The first power feeder 51, the second power feeder 52, and the third power feeder 53 including the common power feeding rail 50a as described can be arranged to have a relatively compact layout in such a manner that the three power feeders are concentrated.

In the vehicle seat 1 illustrated in FIG. 15, the terminal T of the first power feeder 51, the terminal T of the second power feeder 52, and the terminal T of the third power feeder 53 can be arranged in the manner concentrated on the front side of the vehicle seat 1.

### (Fourteenth Embodiment)

Next, a fourteenth embodiment of the vehicle seat according to the present invention will be described. Note that portions identical to those of the first and sixth embodiments are denoted by the same reference characters, and description will be provided only for different portions.

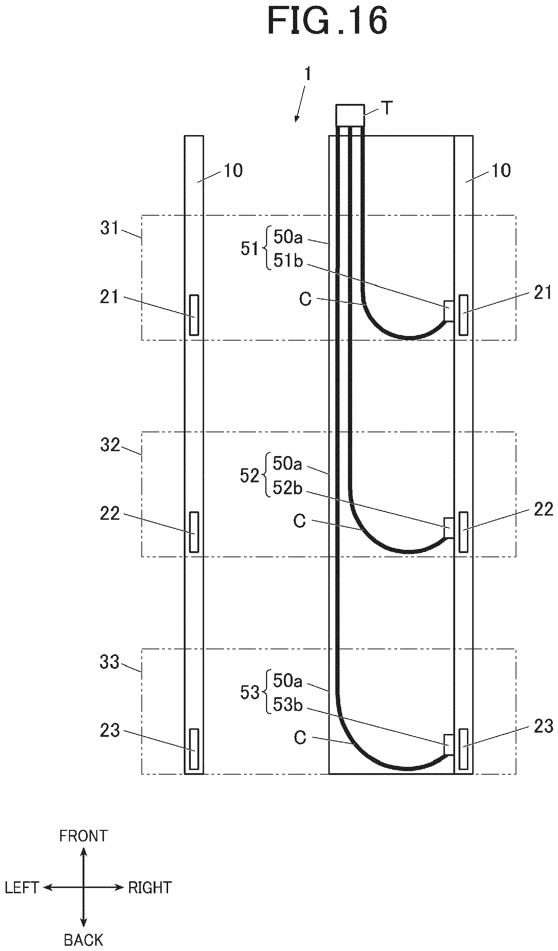

The vehicle seat 1 illustrated in FIG. 16 includes three-row seats having the first seat 31 as a front seat, the second seat 32 as a middle seat, and the third seat 33 as a rear seat.

This vehicle seat 1 includes the first power feeder 51 that feeds power to an electric component (the electric component 40; see FIG. 1) provided for the first seat 31, the second power feeder 52 that feeds power to an electric component (the electric component 40; see FIG. 1) provided for the second seat 32, and the third power feeder 53 that feeds power to an electric component (the electric component 40; see FIG. 1) provided for the third seat 33.

The first power feeder 51, the second power feeder 52, and the third power feeder 53 of the vehicle seat 1 illustrated in FIG. 16 are located on an identical side of the lower rail 10 which is one of the pair of lower rails 10. The first power feeder 51, the second power feeder 52, and the third power feeder 53 are located between the pair of lower rails 10.

The first power feeder 51, the second power feeder 52, and the third power feeder 53 of the fourteenth embodiment include the common power feeding rail 50a. The first power feeder 51 has the first mover 51b that moves along the common power feeding rail 50a. The second power feeder 52 has the second mover 52b that moves along the common power feeding rail 50a. The third power feeder 53 has the third mover 53b that moves along the common power feeding rail 50a.

The first power feeder 51, the second power feeder 52, and the third power feeder 53 herein are located on the left of the lower rail 10 on the right side in the drawing. The power feeding rail 50a shared by the first power feeder 51, the second power feeder 52, and the third power feeder 53 is arranged to extend along the left side surface of the lower rail 10 on the right side in the drawing in the orientation in the longitudinal direction of the lower rail 10.

The first mover 51b of the first power feeder 51 is connected to one end of the flexible flat cable C housed in a front region of the common power feeding rail 50a. The first mover 51b is movable in the orientation in the longitudinal direction of the lower rail 10 in the front region of the power feeding rail 50a.

The second mover 52b of the second power feeder 52 is connected to one end of the flexible flat cable C housed in a middle region of the common power feeding rail 50a. The second mover 52b is movable in the orientation in the longitudinal direction of the lower rail 10 in the middle region of the power feeding rail 50a.

The third mover 53b of the third power feeder 53 is connected to one end of the flexible flat cable C housed in a back side region of the common power feeding rail 50a. The third mover 53b is movable in the orientation in the longitudinal direction of the lower rail 10 in the back side region of the power feeding rail 50a.

Even when the first power feeder 51, the second power feeder 52, and the third power feeder 53 in the vehicle seat 1 are arranged as illustrated in FIG. 16, power can be supplied suitably to the first seat 31, the second seat 32, and the third seat 53.

The first power feeder 51, the second power feeder 52, and the third power feeder 53 including the common power feeding rail 50a as described can be arranged to have a relatively compact layout in such a manner that the three power feeders are concentrated.

In the vehicle seat 1 illustrated in FIG. 16, the terminal T of the first power feeder 51, the terminal T of the second power feeder 52, and the terminal T of the third power feeder 53 can be arranged in the manner concentrated on the front side of the vehicle seat 1.

### (Fifteenth Embodiment)

Next, a fifteenth embodiment of the vehicle seat according to the present invention will be described. Note that portions identical to those of the first embodiment are denoted by the same reference characters, and description will be provided only for different portions.

Power feeders included in the vehicle seat 1 of the fifteenth embodiment are power feeders each including a mover (sliding protector) that moves along a power feeding rail so as to adjust a pull-out amount of a wire harness housed in a harness housing (harness wind-up device), which is a technology disclosed in Patent Document 3 above (JP 2016-135639 A).

The vehicle seat 1 of the fifteenth embodiment includes a first power feeder 56 that feeds power to an electric component (the electric component 40; see FIG. 1) provided for the first seat 31 and a second power feeder 57 that feeds power to an electric component (the electric component 40; see FIG. 1) provided for the second seat 32.

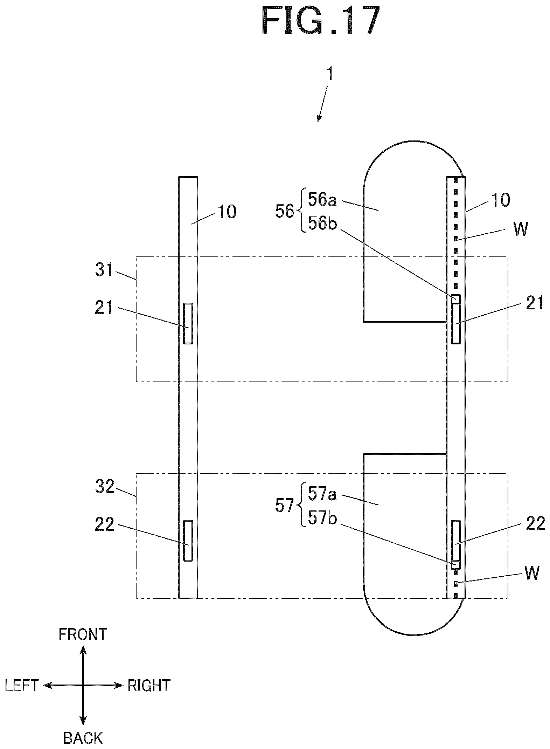

The vehicle seat 1 illustrated in FIG. 17 includes the first power feeder 56 located on the front end side of the lower rail 10 on the right side in the drawing, and the second power feeder 57 located on the back end side of the lower rail 10 on the right side in the drawing.

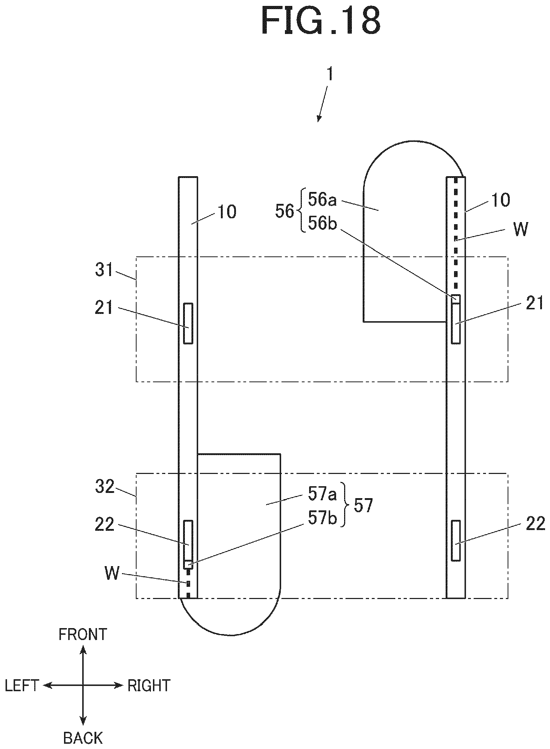

The vehicle seat 1 illustrated in FIG. 18 includes the first power feeder 56 located on the front end side of the lower rail 10 on the right side in the drawing, and the second power feeder 57 located on the back end side of the lower rail 10 on the left side in the drawing.

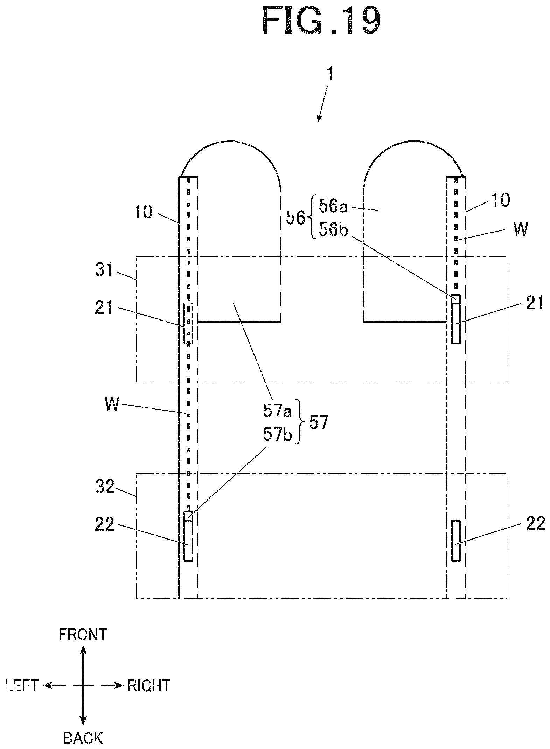

The vehicle seat 1 illustrated in FIG. 19 includes the first power feeder 56 located on the front end side of the lower rail 10 on the right side in the drawing, and the second power feeder 57 located on the front end side of the lower rail 10 on the left side in the drawing.

The first power feeder 56 has a first harness housing 56a that houses a wire harness W such as by winding it up, and a first mover 56b that moves along the lower rail 10 as the power feeding rail. The first mover 56b is attached to the first upper rail 21.

One end of the wire harness W is connected to the first mover 56b, and the other end of the wire harness W is connected to the control device 60 and the power source 70 (see FIG. 1) through predetermined wires.

Since the first mover 56b of the first power feeder 56 can move in the front-back direction in accordance with the sliding of the first upper rail 21 (the first seat 31), the first power feeder 56 can suitably feed power to the electric component (40) provided for the first seat 31 and the drives M that slide the first seat 31 (the first upper rails 21).

Note that the wire harness W is an electric cable having flexibility, which is a cable to be wound up into the first harness housing 56a and pulled out from the first harness housing 56a in accordance with the movement of the first mover 56b.

The second power feeder 57 has a second harness housing 57a that houses the wire harness W such as by winding it up, and a second mover 57b that moves along the lower rail 10 as the power feeding rail. The second mover 57b is attached to the second upper rail 22.

One end of the wire harness W is connected to the second mover 57b, and the other end of the wire harness W is connected to the control device 60 and the power source 70 (see FIG. 1) through predetermined wires.

Since the second mover 57b of the second power feeder 57 can move in the front-back direction in accordance with the sliding of the second upper rail 22 (the second seat 32), the second power feeder 57 can suitably feed power to the electric component (40) provided for the second seat 32 and the drives M that slide the second seat 32 (the second upper rails 22).

Note that the wire harness W is an electric cable having flexibility, which is a cable to be wound up into the second harness housing 57a and pulled out from the second harness housing 57a in accordance with the movement of the second mover 57b.

Note that the first power feeder 56 and the second power feeder 57 are power feeders in which the sliding protector (wire harness) disclosed in Patent Document 3 above (JP 2016-135639 A) is used and are thus not described herein in detail.

Even when the first power feeder 56 and the second power feeder 57 in the vehicle seat 1 are arranged as illustrated in FIG. 17, FIG. 18, or FIG. 19, power can be supplied suitably to the first seat 31 and the second seat 32.

### (Sixteenth Embodiment)

Next, a sixteenth embodiment of the vehicle seat according to the present invention will be described. Note that portions identical to those of the first and fifteenth embodiments are denoted by the same reference characters, and description will be provided only for different portions.

The vehicle seat 1 of the sixteenth embodiment includes three-row seats having the first seat 31 as a front seat, the second seat 32 as a middle seat, and the third seat 33 as a rear seat.

The vehicle seat 1 of the sixteenth embodiment includes the first power feeder 56 that feeds power to an electric component (the electric component 40; see FIG. 1) provided for the first seat 31, the second power feeder 52 that feeds power to an electric component (the electric component 40; see FIG. 1) provided for the second seat 32, and a third power feeder 58 that feeds power to an electric component (the electric component 40; see FIG. 1) provided for the third seat 33.

Note that the respective power feeders also feed power to the drives M that slide the respective seats (upper rails).

The first power feeder 56 that feeds power to the first seat 31 and the third power feeder 58 that feeds power to the third seat 33 are power feeders in which the sliding protector (wire harness) disclosed in Patent Document 3 above (JP 2016-135639 A) is used (see the fifteenth embodiment). The third power feeder 58 is a power feeder similar to the first power feeder 56 and the second power feeder 57 and is thus not described in detail.

The second power feeder 52 that feeds power to the second seat 32 is a power feeder in which the flexible flat cable disclosed in Patent Document 2 above (JP 2020-32862 A) is used.

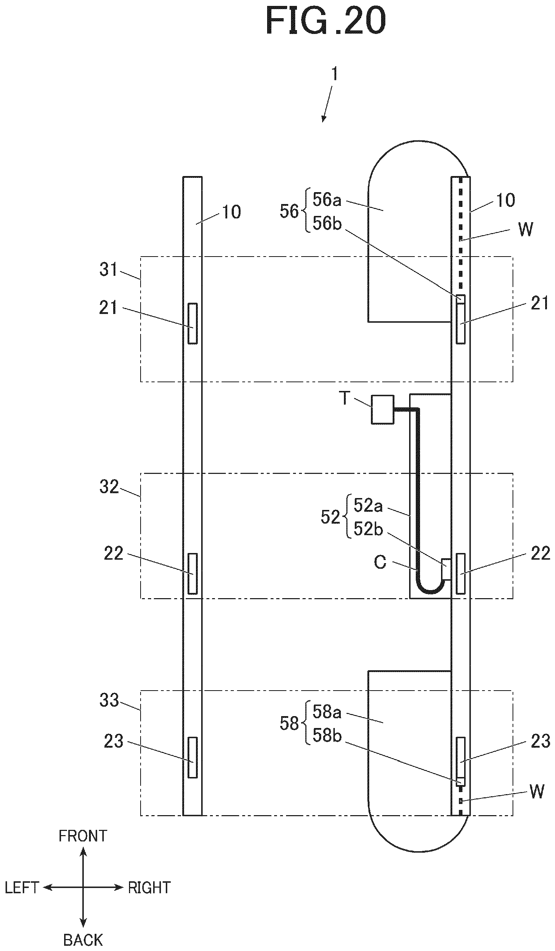

A vehicle seat illustrated in FIG. 20 includes the first power feeder 56 located on the front end side of the lower rail 10 on the right side in the drawing, the second power feeder 52 located on the left side surface on the central side in the longitudinal direction of the lower rail 10 on the right side in the drawing, and the third power feeder 58 located on the back end side of the lower rail 10 on the right side in the drawing.

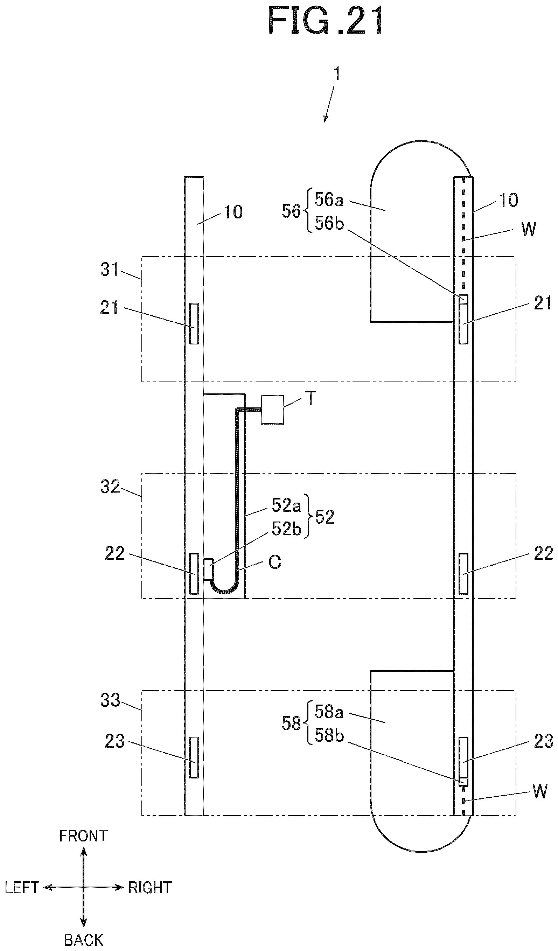

A vehicle seat illustrated in FIG. 21 includes the first power feeder 56 located on the front end side of the lower rail 10 on the right side in the drawing, the second power feeder 52 located on the right side surface on the central side in the longitudinal direction of the lower rail 10 on the left side in the drawing, and the third power feeder 58 located on the back end side of the lower rail 10 on the right side in the drawing.

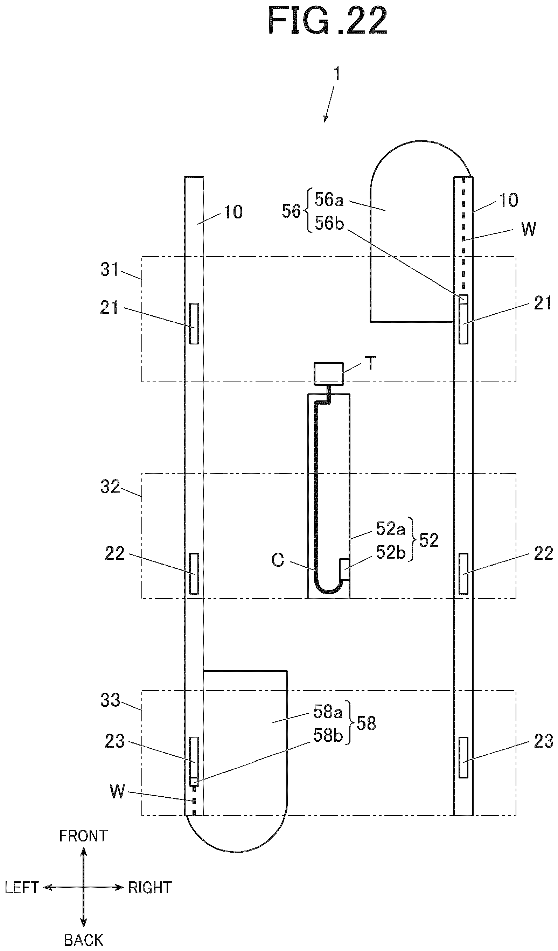

A vehicle seat illustrated in FIG. 22 includes the first power feeder 56 located on the front end side of the lower rail 10 on the right side in the drawing, the second power feeder 52 located at a position between the lower rails 10 on the left and right in the drawing and away from each of the lower rails 10, and the third power feeder 58 located on the back end side of the lower rail 10 on the left side in the drawing.

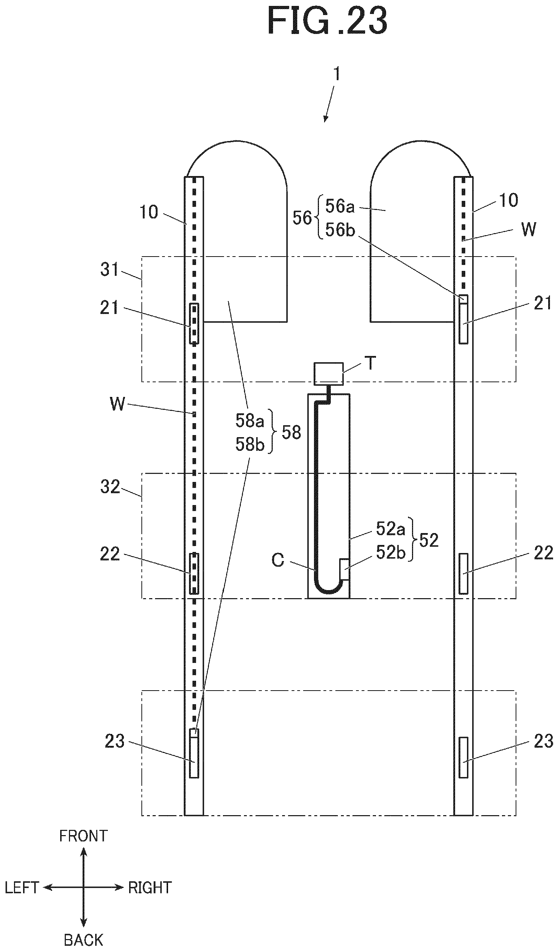

A vehicle seat illustrated in FIG. 23 includes the first power feeder 56 located on the front end side of the lower rail 10 on the right side in the drawing, the second power feeder 52 located at a position between the lower rails 10 on the left and right in the drawing and away from each of the lower rails 10, and the third power feeder 58 located on the front end side of the lower rail 10 on the left side in the drawing.

Even when the first power feeder 56, the second power feeder 52, and the third power feeder 58 in the vehicle seat 1 are arranged as illustrated in FIG. 20, FIG. 21, FIG. 22, or FIG. 23, power can be supplied suitably to the first seat 31, the second seat 32, and the third seat 33.

### [Power Feeding Connection Structure For Detachable Seat]

Next, a power feeding connection structure for a detachable seat included in the vehicle seat 1 will be described.

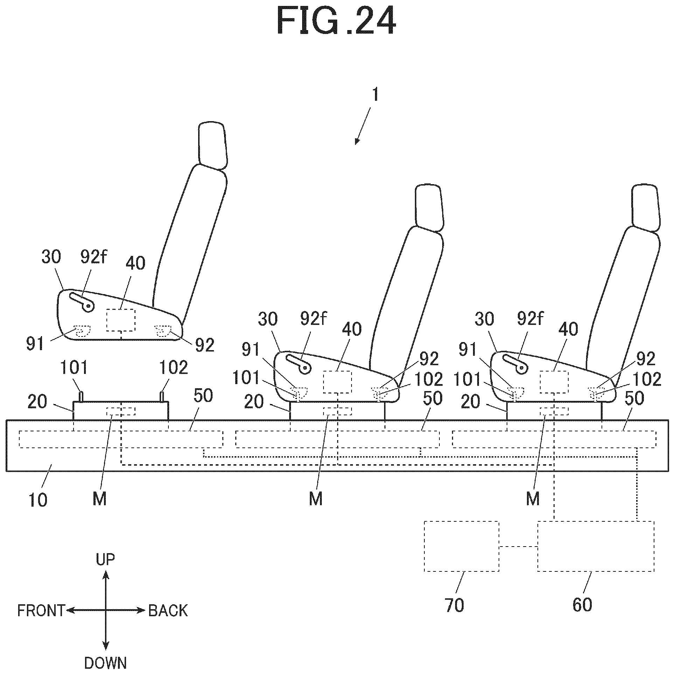

As illustrated in FIG. 24, for example, the vehicle seat 1 includes the lower rail 10 and the upper rail 20 that moves along the lower rail 10. The seat 30 is coupled to the upper rail 20. Driving of the drive M located in the upper rail 20 moves the upper rail 20 along the lower rail 10 to slide the seat 30 back and forth. Herein, three-row seats having a front seat, a middle seat, and a rear seat are illustrated as an example.

This seat 30 includes a seat attaching/detaching mechanism 90, which is coupled detachably to the upper rail 20. Herein, the seat attaching/detaching mechanism 90 is coupled to a first striker 101 and a second striker 102 provided on the upper rail 20, so that the seat 30 is coupled to the upper rail 20.

The seat 30 is provided with the electric component 40 such as a heater and includes the power feeder 50 that feeds power to the electric component 40 and the drive M in the electrically powered slide rail.

The electric component 40 (the drive M) and the power feeder 50 are connected to the power source 70 via the control device 60 through predetermined wires.

The electric component 40 (the drive M) and the power feeder 50 are also connected electrically via a wire.

In a case of detaching the seat 30 from the upper rail 20, the electric component 40 and the power feeder 50 are disconnected.

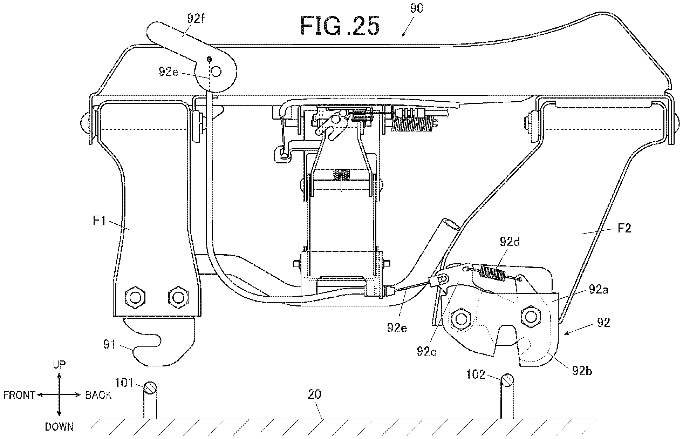

The seat attaching/detaching mechanism 90 includes a front lock 91 to be engaged with the first striker 101 on the upper rail 20, and a back lock 92 that fastens the second striker 102 to the upper rail 20, as illustrated in FIG. 24 to FIG. 27, for example.

The front lock 91 is a hook-like member provided at a lower part of a front leg F1 of a frame to clutch the first striker 101.

The back lock 92 includes a base frame 92a provided at a lower part of a back leg F2 of the frame, a lock jaw 92b provided for the base frame 92a so as to be able to turn, a cam jaw 92c provided for the base frame 92a so as to be able to turn in contact with the lock jaw 92b, a coil spring 92d laid astride the cam jaw 92c and the lock jaw 92b, a traction wire 92e having one end tied to the cam jaw 92c, an operation lever 92f to which the other end of the traction wire 92e is tied, and the like.

The lock jaw 92b is a hook-like member that clutches the second striker 102.

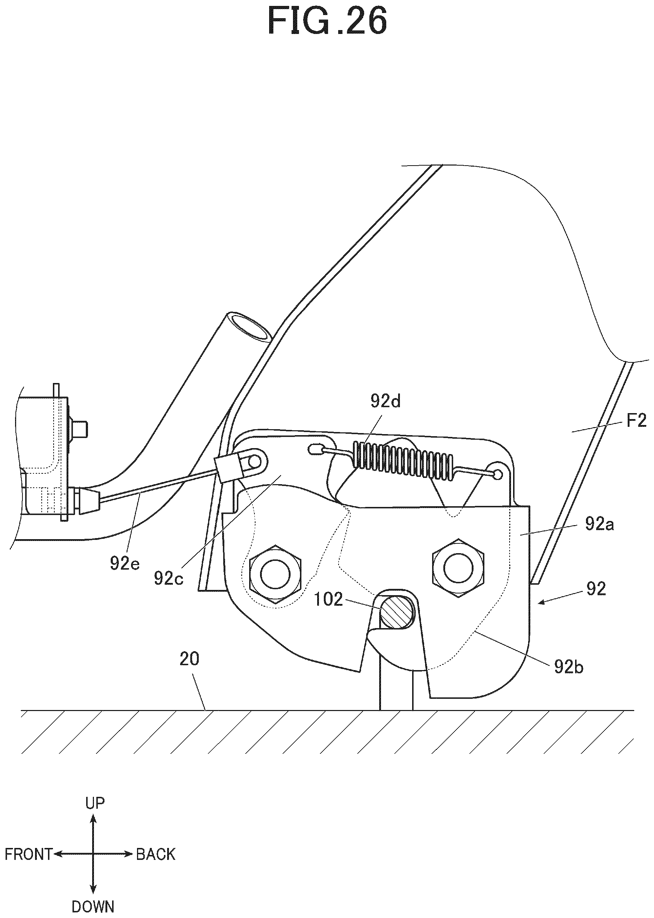

The seat attaching/detaching mechanism 90 is coupled to the upper rail 20 in a state in which the front lock 91 is engaged with the first striker 101 in a clutching manner and the back lock 92 fastens the second striker 102 (see FIG. 26) with the lock jaw 92b clutching the second striker 102 in conjunction with the base frame 92a, so that the seat 30 is coupled to the upper rail 20.

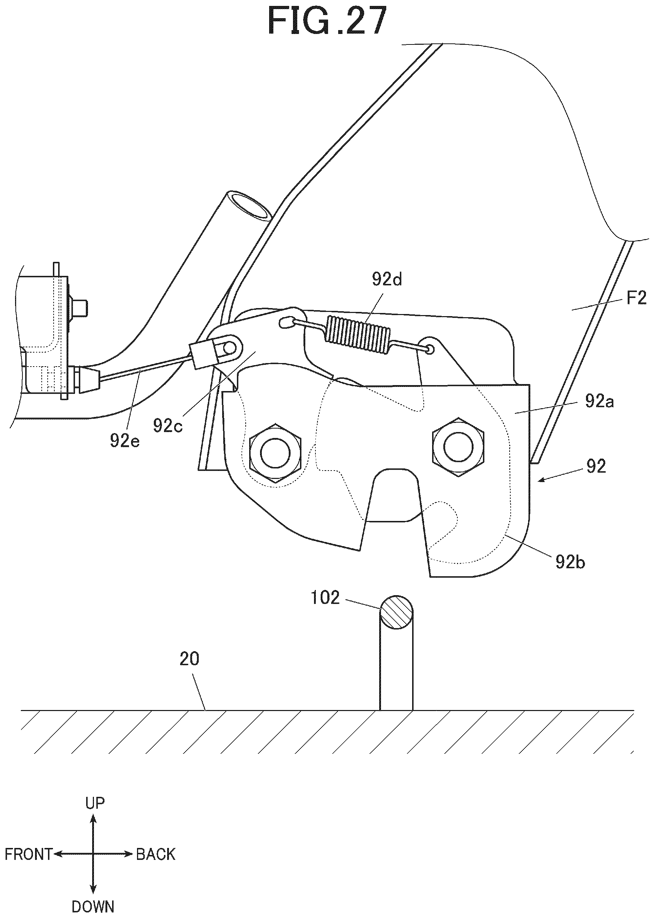

When the lock jaw 92a is turned counterclockwise in the drawing by performing a predetermined operation of turning the operation lever 92f in a pull-up direction to pull the traction wire 92e, thereby turning the cam jaw 92c counterclockwise in the drawing and contracting the coil spring 92d, a state in which fastening of the back lock 92 (the lock jaw 92b) and the second striker 102 is released (see FIG. 27) is brought about, so that the seat attaching/detaching mechanism 90 and the upper rail 20 is decoupled. Thus, the seat 30 can be detached from the upper rail 20.

With this seat attaching/detaching mechanism 90, the seat 30 is detachably coupled to the upper rail 20 and is used as the detachable seat 30.

Note that the seat attaching/detaching mechanism 90 is a well-known technology disclosed in JP 2006-69499 A or the like, for example, and is thus not described herein in detail.

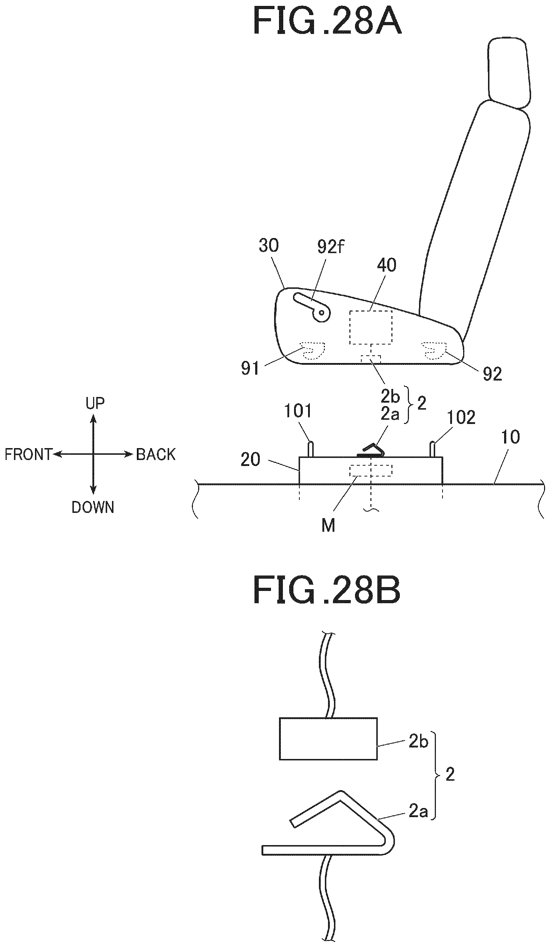

The power feeding connection structure 2 for the detachable seat 30 has a first connector 2a provided on the upper rail 20 side and a second connector 2b provided on the seat 30 side as illustrated in FIG. 28A and FIG. 28B, for example.

The first connector 2a and the second connector 2b are provided at positions where they come into contact in a state in which the seat 30 is coupled to the upper rail 20.

The first connector 2a is connected to the power feeder 50 through a predetermined wire.

The second connector 2b is connected to the electric component 40 through a predetermined wire.

A contact spring is used for the first connector 2a illustrated in FIG. 28A and FIG. 28B.

This power feeding connection structure 2 enables the first connector 2a and the second connector 2b to be joined to each other in the state in which the seat 30 is coupled to the upper rail 20, thereby electrically connecting the power feeder 50 and the electric component 40. The power feeding connection structure 2 can also release joining of the first connector 2a and the second connector 2b in the state in which the seat 30 is detached from the upper rail 20, thereby disconnecting the power feeder 50 and the electric component 40.

In particular, the use of the contact spring for the first connector 2a can facilitate joining of, and release of joining of, the first connector 2a and the second connector 2b.

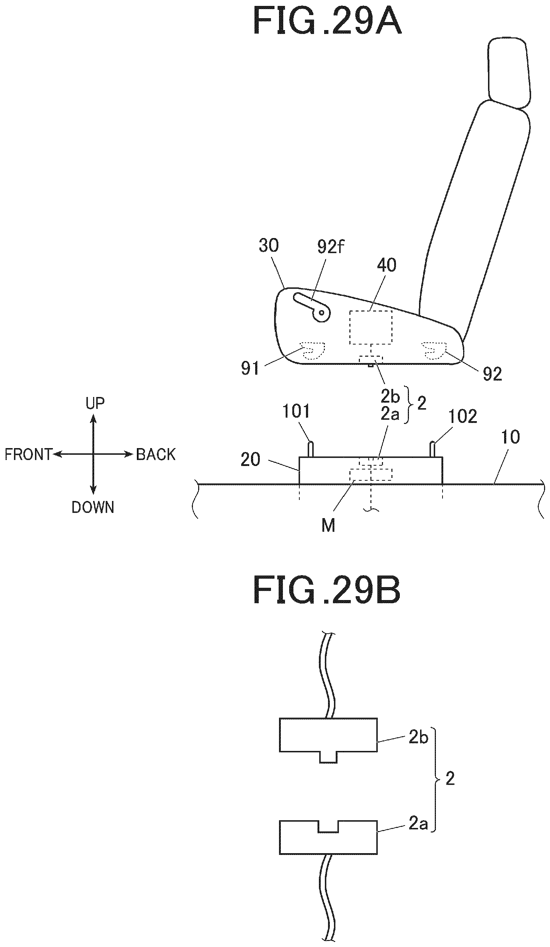

As illustrated in FIG. 29A and FIG. 29B, for example, the power feeding connection structure 2 may be implemented by using such a coupler that the first connector 2a provided on the upper rail 20 side is a socket (female) and the second connector 2b provided on the seat 30 side is a plug (male).

This power feeding connection structure 2 enables the second connector 2b to be inserted into and joined to the first connector 2a in the state in which the seat 30 is coupled to the upper rail 20, thereby electrically connecting the power feeder 50 and the electric component 40. The power feeding connection structure 2 also enables the second connector 2b to be pulled out from the first connector 2a to release joining in the state in which the seat 30 is detached from the upper rail 20, thereby disconnecting the power feeder 50 and the electric component 40.

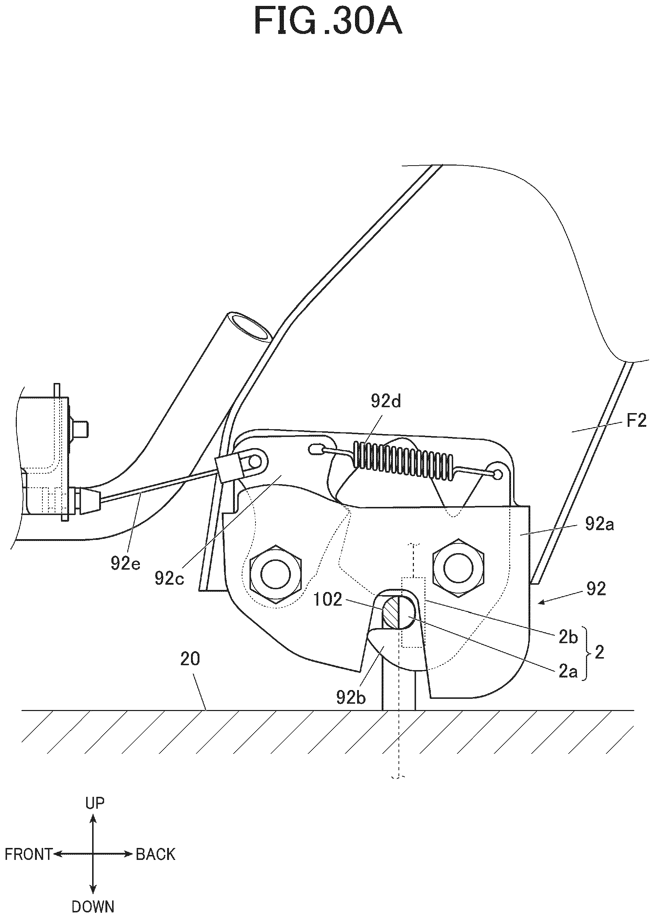

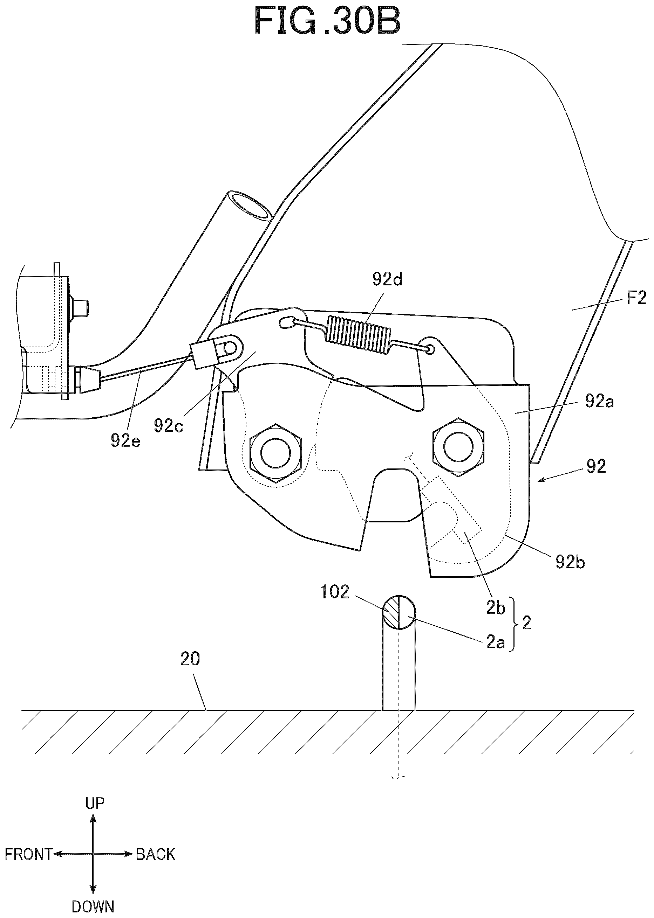

As illustrated in FIG. 30A and FIG. 30B, for example, in the power feeding connection structure 2, the first connector 2a provided on the upper rail 20 side may be provided for the second striker 102, and the second connector 2b provided on the seat 30 side may be provided for the lock jaw 92b of the seat attaching/detaching mechanism 90 (the back lock 92).

This power feeding connection structure 2 enables the first connector 2a and the second connector 2b to be joined in the state in which the seat 30 (the seat attaching/detaching mechanism 90) is coupled to the upper rail 20, thereby electrically connecting the power feeder 50 and the electric component 40. The power feeding connection structure 2 also enables joining of the first connector 2a and the second connector 2b to be released in the state in which the seat 30 (the seat attaching/detaching mechanism 90) is detached from the upper rail 20, thereby disconnecting the power feeder 50 and the electric component 40.

Note that the first connector 2a provided on the upper rail 20 side may be provided for the first striker 101, and the second connector 2b provided on the seat 30 side may be provided for the front lock 91.

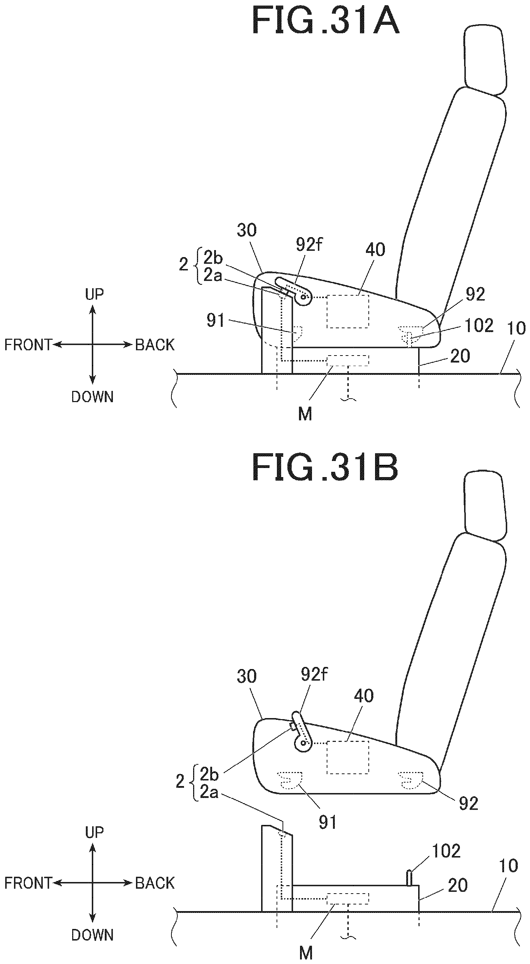

As illustrated in FIG. 31A and FIG. 31B, for example, in the power feeding connection structure 2, the second connector 2b provided on the seat 30 side may be provided on a lower surface side of the operation lever 92f of the seat attaching/detaching mechanism 90, and the first connector 2a provided on the upper rail 20 side may be provided on a lateral side of the seat 30 at a position opposed to the lower surface of the operation lever 92f.

The first connector 2a and the second connector 2b herein are in contact with each other in a state in which the operation lever 92f is not operated and are separated to come out of contact in a state in which the operation of turning the operation lever 92f in the pull-up direction is performed.

This power feeding connection structure 2 enables the first connector 2a and the second connector 2b to be joined in the state in which the seat 30 (the seat attaching/detaching mechanism 90) is coupled to the upper rail 20, thereby electrically connecting the power feeder 50 and the electric component 40. The power feeding connection structure 2 also enables joining of the first connector 2a and the second connector 2b to be released by operating the operation lever 92f for detaching the seat 30 (the seat attaching/detaching mechanism 90) from the upper rail 20, thereby disconnecting the power feeder 50 and the electric component 40.

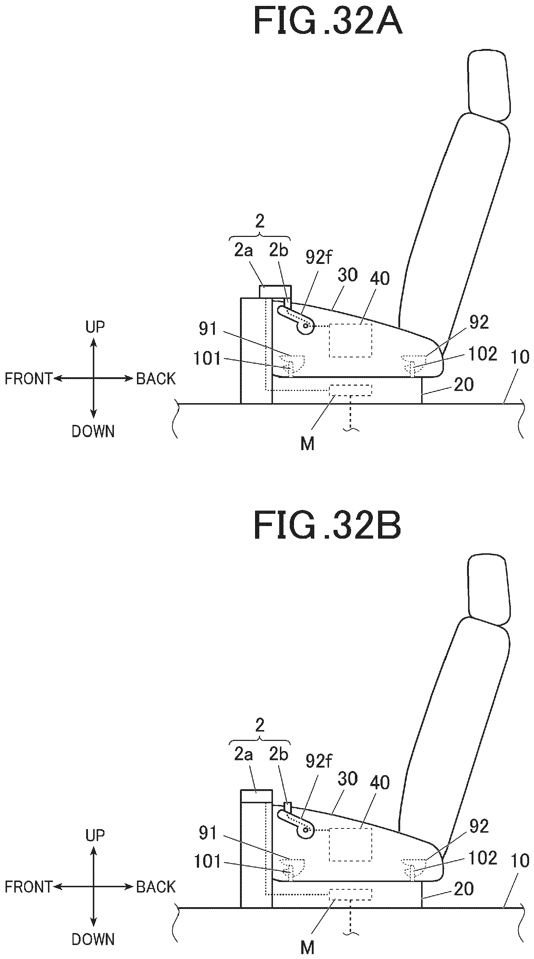

As illustrated in FIG. 32A and FIG. 32B, for example, in the power feeding connection structure 2, the second connector 2b provided on the seat 30 side may be provided on the upper surface side of the operation lever 92f of the seat attaching/detaching mechanism 90, and the first connector 2a provided on the upper rail 20 side may be provided in an arrangement which is lateral to the seat 30 and opposed to the upper surface of the operation lever 92f.

The first connector 2a herein is provided to be switchable between the arrangement opposed to the upper surface of the operation lever 92f (see FIG. 32A) and an arrangement retracted from the upper surface side of the operation lever 92f (see FIG. 32B).

When the first connector 2a is in the arrangement opposed to the upper surface of the operation lever 92f, the first connector 2a is in contact with the second connector 2b. When the first connector 2a is in the arrangement retracted from the upper surface side of the operation lever 92f, the first connector 2a is out of contact with the second connector 2b.

In particular, in the state in which the first connector 2a is in the arrangement opposed to the upper surface of the operation lever 92f, the operation lever 92f cannot be operated, which prevents the seat 30 (the seat attaching/detaching mechanism 90) from being detached from the upper rail 20.

This power feeding connection structure 2 enables the first connector 2a and the second connector 2b to be joined in the state in which the seat 30 (the seat attaching/detaching mechanism 90) is coupled to the upper rail 20, thereby electrically connecting the power feeder 50 and the electric component 40. The power feeding connection structure 2 also enables joining of the first connector 2a and the second connector 2b to be released by performing the operation of retracting the first connector 2a from above the operation lever 92f before operating the operation lever 92f for detaching the seat 30 (the seat attaching/detaching mechanism 90) from the upper rail 20, thereby disconnecting the power feeder 50 and the electric component 40.

### [Seat Position Correction]

Next, seat position correction to be performed for more accurately sensing the position of the seat 30 included in the vehicle seat 1 on the lower rail 10 will be described.

For example, in a case in which the vehicle seat 1 includes two-row seats (the first seat 31 and the second seat 32) or three-row seats (the first seat 31, the second seat 32, and the third seat 33), and each seat is electrically slidable, the position of each seat needs to be recognized accurately in order to keep a distance so that front and rear seats do not come into contact with each other on the lower rail 10.

Specifically, control for counting pulses when electric motors as the drives M that slide the seat 30 rotate clockwise or pulses when the electric motors counterrotate, thereby recognizing a position to which the seat 30 has moved forward on the lower rail 10 and a position to which the seat 30 has moved backward is exerted.

However, electric motors differ in driving accuracy due to individual differences (degradation over time), an operating environment temperature, or the like. Thus, an error may occur in position detection performed by counting pulses of the electric motors.

Seat position correction that complements such an error will be described below.

### (Seat Position Correction Through Use Of Seat Detection Sensors; Example 1)

Example 1 of seat position correction processing through use of the seat detection sensors 80 will be described.

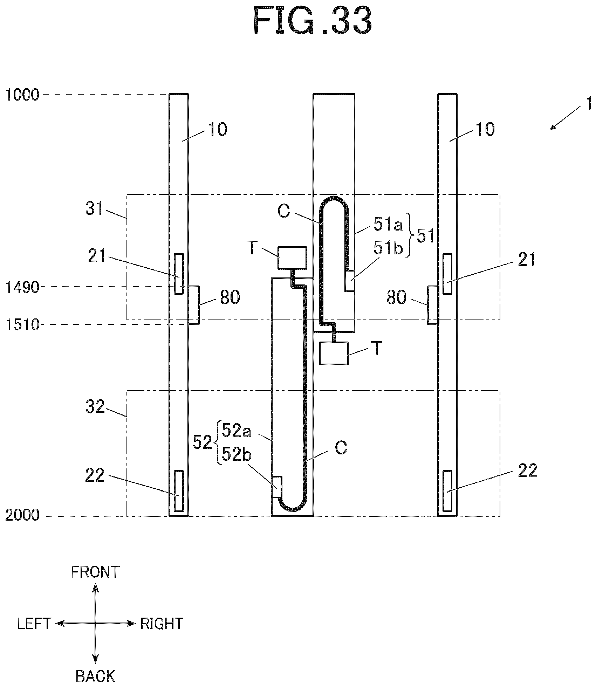

The vehicle seat 1 illustrated in FIG. 33 includes sensors for detecting the positions of the first seat 31 and the second seat 32 that slide back and forth in the longitudinal direction of the lower rails 10.

Herein, a configuration in which the seat detection sensors are located in the vehicle seat 1 of the third embodiment (see FIG. 4) is illustrated.

Specifically, the seat detection sensors 80 that detect the positions of the first seat 31 and the second seat 32 are located at a position on a substantially central side in the longitudinal direction of the lower rail 10 on the right side in the drawing and a position on a substantially central side in the longitudinal direction of the lower rail 10 on the left side in the drawing.

The seat detection sensors 80 are provided at locations where the movable ranges of the first seat 31 and the second seat 32 are overlapped.

Note that the positions (lengthwise positions, whether on both the rails or one rail), the number, detection systems, and the like of the seat detection sensors 80 are selected freely.

The seat detection sensors 80 are connected to the control device 60 and the power source 70 (see FIG. 1) through predetermined wires.

The seat detection sensors 80 have the function of respectively detecting the position of the first seat 31 and the position of the second seat 32 on the lower rails 10 and outputting information on the positions to the control device 60.

In the present embodiment (Example 1), positional information on the front end of the lower rail 10 is set at 1000 pt, positional information on the back end of the lower rail 10 is set at 2000 pt, positional information on a front end of the seat detection sensor 80 is set at 1490 pt, and positional information on a back end of the seat detection sensor 80 is set at 1510 pt, as illustrated in FIG. 33, for example.

In a case in which the first seat 31 (the first upper rails 21) arrives at the front end of the lower rail 10 or in a case in which the second seat 32 (the second upper rails 22) arrives at the back end of the lower rail 10, the load on the electric motors as the drives M increases. This enables the control device 60 to determine that the first seat 31 has arrived at the position of 1000 pt of the front end of the lower rail 10 or that the second seat 32 has arrived at the position of 2000 pt of the back end of the lower rail 10 based on the increase in load on the electric motors.

Note that in the present embodiment, pt shall indicate mm (millimeter), but the unit is not limited to this, and can be changed as appropriate within a range not departing from the scope of the present invention. For example, pt may indicate inch or any other dimensional unit.

At timing when the first seat 31 or the second seat 32 moving backward arrives at the seat detection sensor 80, the control device 60 can determine that the seat has arrived at the position of 1490 pt.

At timing when the first seat 31 or the second seat 32 moving forward arrives at the seat detection sensor 80, the control device 60 can determine that the seat has arrived at the position of 1510 pt.

Herein, the seat detection sensor 80 detects rising timing (timing when seat detection is started) when the seat is detected, as the position of the seat.

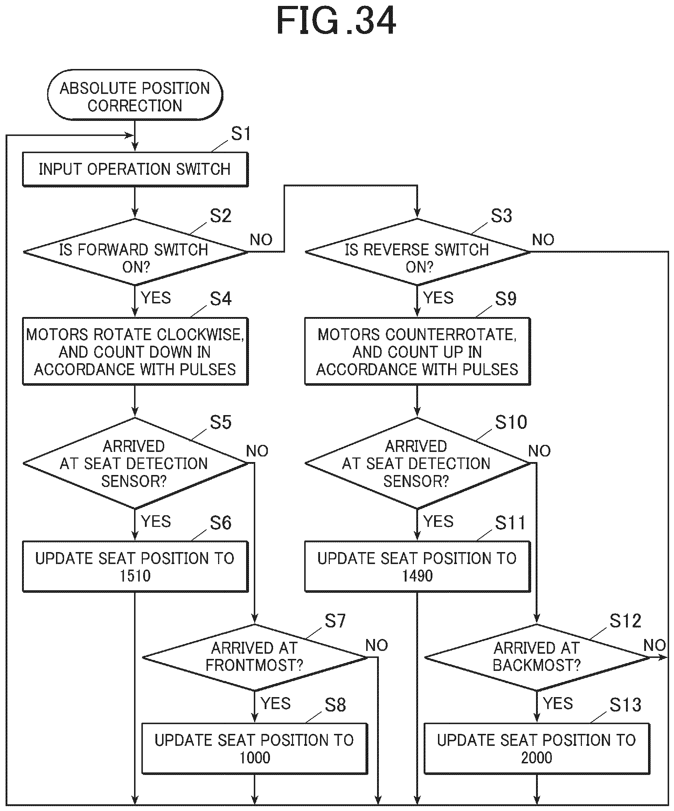

Seat position correction processing (Example 1) in this vehicle seat 1 will be described based on the flowchart illustrated in FIG. 34.

First, a sliding seat operation switch (the electric component 40; see FIG. 1) is operated (step S1). In a case in which the operation is a forward switch, the process proceeds into step S2, and in a case in which the operation is a reverse switch, the process proceeds into step S3.

In a case in which the forward switch is ON (step S2; YES), the electric motors as the drives M rotate clockwise to move the seat (31, 32) forward. At this time, positional information on the seat is counted down in accordance with the pulses of the motors to update the positional information as needed (step S4).

In the case in which the seat (31, 32) arrives at the seat detection sensor 80 and the seat detection sensor 80 detects the seat (31, 32) (step S5; YES), updating for setting the positional information on the seat at 1510 pt is performed (step S6).

In a case in which the seat (31, 32) does not arrive at the seat detection sensor 80 (step S5; NO), but arrives at the front end (frontmost) of the lower rail 10 (step S7; YES), updating for setting the positional information on the seat at 1000 pt is performed.

In a case in which the reverse switch is ON (step S3; YES), the electric motors as the drives M counterrotate to move the seat (31, 32) backward. At this time, the positional information on the seat is counted up in accordance with the pulses of the motors to update the positional information as needed (step S9).

In the case in which the seat (31, 32) arrives at the seat detection sensor 80 and the seat detection sensor 80 detects the seat (31, 32) (step S10; YES), updating for setting the positional information on the seat at 1490 pt is performed (step S11).

In a case in which the seat (31, 32) does not arrive at the seat detection sensor 80 (step S10; NO), but arrives at the back end (backmost) of the lower rail 10 (step S12; YES), updating for setting the positional information on the seat at 2000 pt is performed (step S13).

As described, an error in positional information caused by pulse counting can be complemented by performing correction for updating the absolute position of the seat based on the arrival of the first seat 31 at the front end (frontmost) of the lower rail 10, correction for updating the absolute position of the seat based on the arrival of the second seat 32 at the back end (backmost) of the lower rail 10, and correction for updating the absolute position of the seat based on the detection of the seat (31, 32) by the seat detection sensor 80, in addition to updating of the positional information by counting pulses of the electric motors. This enables the position of each seat (31, 32) to be detected more accurately.

In particular, by updating the absolute position of the seat by the seat detection sensor 80 detecting the seat (31, 32), correction for updating the absolute position of the seat can be performed at high frequencies even in such a case in which the first seat 31 is not caused to arrive at the front end (frontmost) of the lower rail 10 or the second seat 32 is not caused to arrive at the back end (backmost) of the lower rail 10.

### (Seat Position Correction Through Use Of Seat Detection Sensors; Example 2)

Example 2 of seat position correction processing through use of the seat detection sensors 80 will be described. Note that portions identical to those of Example 1 are denoted by the same reference characters, and description will be provided only for different portions.

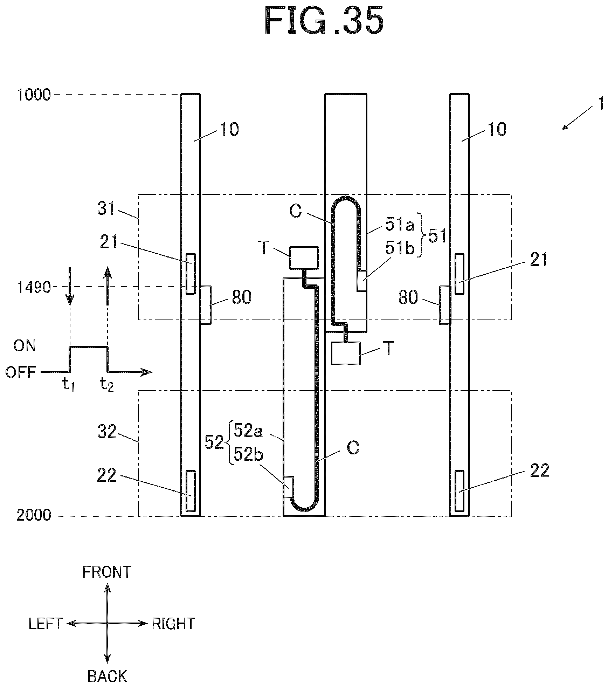

In the present embodiment (Example 2), positional information on the front end of the lower rail 10 is set at 1000 pt, positional information on the back end of the lower rail 10 is set at 2000 pt, and positional information on the front end of the seat detection sensor 80 is set at 1490 pt, as illustrated in FIG. 35, for example.

At timing when the first seat 31 or the second seat 32 moving backward arrives at the seat detection sensor 80, the control device 60 can determine that the seat has arrived at the position of 1490 pt. When the seat is moved backward, the seat detection sensor 80 detects rising timing of seat detection (timing when seat detection is started; "t₁" in FIG. 35) as the position of the seat.

At timing when the first seat 31 or the second seat 32 moving forward arrives at the seat detection sensor 80, the control device 60 can determine that the seat has arrived at the position of 1490 pt. When the seat is moved forward, the seat detection sensor 80 detects falling timing of seat detection (timing when the seat is no longer detected; "t₂" in FIG. 35) as the position of the seat.

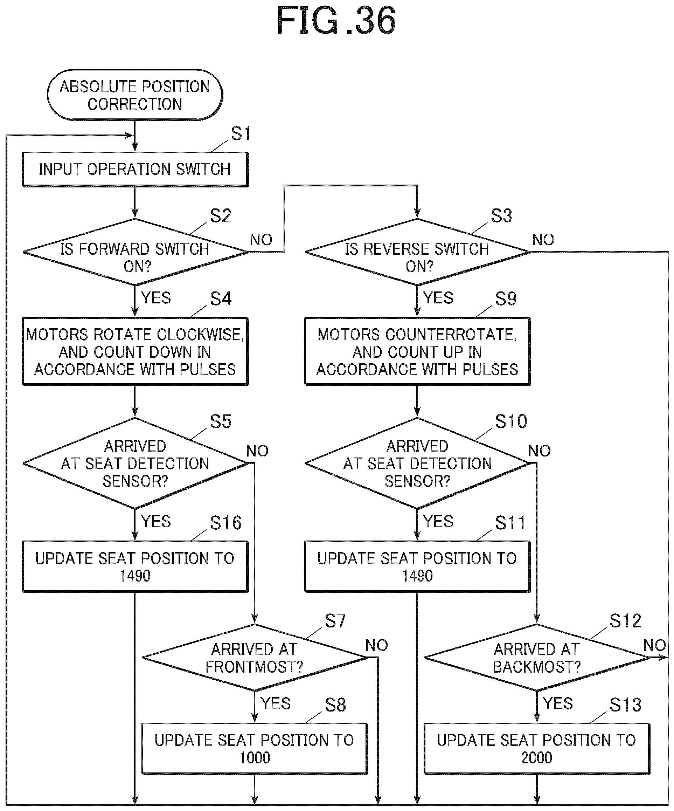

Seat position correction processing (Example 2) in this vehicle seat 1 will be described based on the flowchart illustrated in FIG. 36.

Note that the seat position correction processing in Example 2 is different from the seat position correction processing in Example 1 described above only in terms of correction processing (FIG. 36; step S16) of, when the seat detection sensor 80 detects the seat (31, 32) moving forward, updating the absolute position of the seat.

Specifically, in the case in which a sliding seat operation switch (the electric component 40; see FIG. 1) is operated, and the forward switch is ON (step S2; YES), the electric motors as the drives M rotate clockwise to move the seat (31, 32) forward. At this time, positional information on the seat is counted down in accordance with the pulses of the motors to update the positional information as needed (step S4).

In the case in which the seat (31, 32) arrives at the seat detection sensor 80 and the seat detection sensor 80 detects the seat (31, 32) (step S5; YES), updating for setting the positional information on the seat at 1490 pt is performed (step S16).

Even with such seat position detection by the seat detection sensor 80, correction for updating the absolute position of the seat can be performed so as to complement an error in positional information caused by pulse counting, and the updating (correction) can be performed at higher frequencies.

The position of each seat (31, 32) can be detected more accurately.

Note that in "Seat Position Correction Through Use Of Seat Detection Sensors (Example 1 and Example 2)" described above, the seat detection sensor 80 detects the position of the seat (31, 32) coupled to the upper rails (21, 22) on the lower rails 10 and outputs positional information on the seat (31, 32) to the control device 60, and the correction for updating the absolute position of the seat is performed. However, the present invention is not limited to this, and the seat position correction processing may be performed in a state in which the seat (31, 32) is not coupled to the upper rails (21, 22).

In this case, the seat detection sensor 80 may detect each of the position of the first upper rails 21 and the position of the second upper rails 22 on the lower rails 10 and may perform the correction for updating the absolute position of the seat considering the positional information on the upper rails (21, 22) as the positional information on the seat (31, 32).

### (Seat Position Correction Through Use Of TOF (Time Of Flight) Sensors)

Seat position correction processing through use of TOF sensors 3 will be described.

Note that the configuration and operation of the TOF sensor 3 of a laser light reflection type (laser ranging type) that irradiates a subject with laser light, measures the time until its reflected light returns to a light receiving element in the sensor, and converts the time into a distance is similar to those of conventionally known TOF sensors, and is thus not described herein in detail.

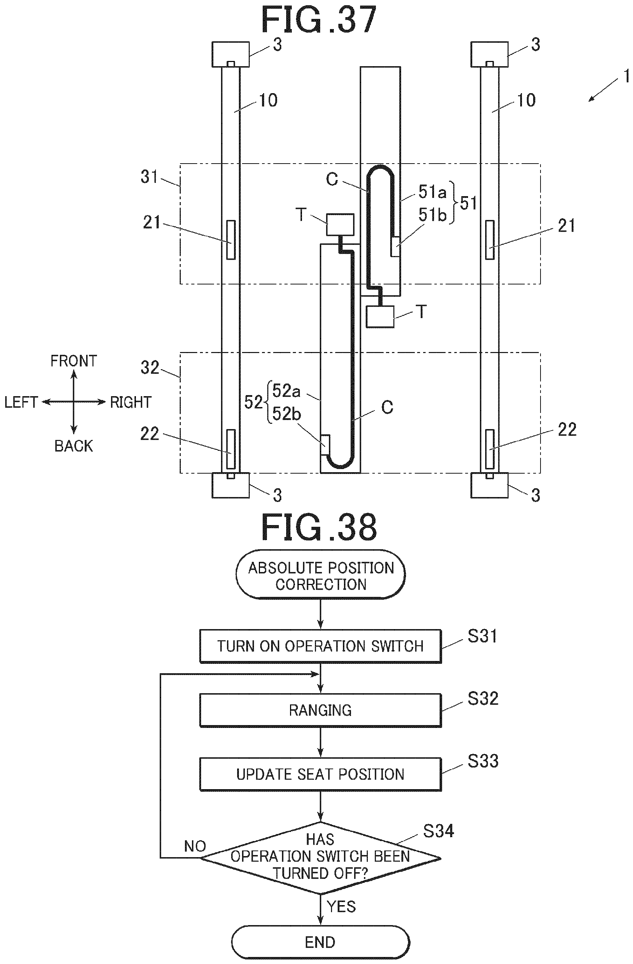

The vehicle seat 1 illustrated in FIG. 37 includes the TOF sensors 3 for detecting the positions of the first seat 31 and the second seat 32 that slide back and forth in the longitudinal direction of the lower rails 10.

Herein, a configuration in which the TOF sensors 3 for seat detection are located in the vehicle seat 1 of the third embodiment (see FIG. 4) is illustrated.

Specifically, the TOF sensors 3 that detect the position of the first seat 31 are located on the front end side of the lower rails 10. This TOF sensor 3 irradiates the first seat 31 or the first upper rail 21 with laser to detect the position of the first seat 31.

The TOF sensors 3 that detect the position of the second seat 32 are located on the back end side of the lower rails 10. This TOF sensor 3 irradiates the second seat 32 or the second upper rail 22 with laser to detect the position of the second seat 32.

The TOF sensors 3 are connected to the control device 60 and the power source 70 (see FIG. 1) through predetermined wires.

The TOF sensors 3 have the function of respectively detecting the position of the first seat 31 and the position of the second seat 32 on the lower rails 10 and outputting data on their positions to the control device 60.

Seat position correction processing in this vehicle seat 1 will be described based on the flowchart illustrated in FIG. 38.

First, a sliding seat operation switch (the electric component 40; see FIG. 1) is operated (step S31).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward.

At this time, the positional information on the seat is counted in accordance with the pulses of the motors, and the positional information is updated as needed.

When the seat (31, 32) moves forward or backward, the TOF sensors 3 are actuated to measure the distance to the first seat 31 or the second seat 32 and each detect the position of the first seat 31 or the second seat 32 (step S32) .

The positional information on the seat is updated based on positional data on the first seat 31 or the second seat 32 detected by the TOF sensors 3 (step S33).

If the operation switch (the electric component 40) is operated (step S34; NO), seat position ranging and seat position updating are repeated. When operation of the operation switch (the electric component 40) is finished (step S34; YES), the seat position correction processing is terminated.

As described, an error in positional information caused by pulse counting can be complemented by performing correction for updating the absolute position of the first seat 31 or the second seat 32 based on the positional data on the seat detected by the TOF sensors 3 in addition to updating of the positional information by counting pulses of the electric motors. This enables the position of each seat (31, 32) to be detected more accurately.

### (Seat Position Correction Through Use Of Strain Detection Sensors)

Seat position correction processing through use of strain detection sensors 4 will be described.

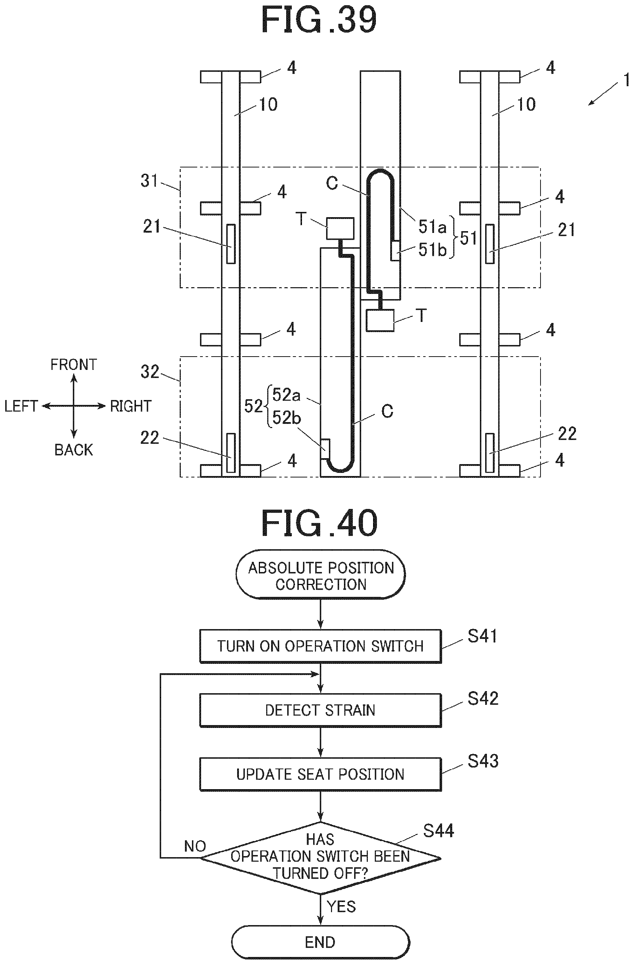

The vehicle seat 1 illustrated in FIG. 39 includes the strain detection sensors 4 for detecting strains of the lower rails 10 caused by the weights of the first seat 31 and the second seat 32 that slide back and forth in the longitudinal direction of the lower rails 10.

Herein, a configuration in which the strain detection sensors 4 are located in the vehicle seat 1 of the third embodiment (see FIG. 4) is illustrated.

Specifically, a plurality of the strain detection sensors 4 are located on the bottom surface of the lower rail 10. In the present embodiment, the four strain detection sensors 4 are located at regular intervals in the longitudinal direction of the lower rail 10.

The strain detection sensors 4 detect different strains of the lower rail 10 in accordance with the positions of the first seat 31 and the second seat 32 that slide back and forth in the longitudinal direction of the lower rail 10.

The strain detection sensors 4 are connected to the control device 60 and the power source 70 (see FIG. 1) through predetermined wires.

The strain detection sensors 4 have the function of detecting strains of the lower rails 10 and outputting data on the strains to the control device 60.

Note that a storage unit of the control device 60 stores a predetermined table in which positional information on the first seat 31 and the second seat 32 on the lower rails 10 and strain data on the lower rails 10 are associated with each other, for example.

Seat position correction processing in this vehicle seat 1 will be described based on the flowchart illustrated in FIG. 40.

First, a sliding seat operation switch (the electric component 40; see FIG. 1) is operated (step S41).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward.

At this time, the positional information on the seat is counted in accordance with the pulses of the motors, and the positional information is updated as needed.

When the seat (31, 32) is moved forward or backward, the strain detection sensors 4 are actuated to detect strains of the lower rails 10 (step S42).

Positional information on the first seat 31 and the second seat 32 on the lower rails 10 is acquired based on the strain data on the lower rails 10 detected by the strain detection sensors 4 and the predetermined table, thereby updating the positional information on the seats (step S43).

If the operation switch (the electric component 40) is operated (step S44; NO), detection of strains of the lower rails 10 and updating of the seat positions are repeated, and when operation of the operation switch (the electric component 40) is finished (step S44; YES), the seat position correction processing is terminated.

As described, an error in positional information caused by pulse counting can be complemented by performing correction for updating the absolute positions of the first seat 31 and the second seat 32 based on the strain data on the lower rails 10 detected by the strain detection sensors 4 in addition to updating of the positional information by counting pulses of the electric motors. This enables the position of each seat (31, 32) to be detected more accurately.

### (Seat Position Correction Based On Pull-Out Amount Of Wire Harness)

Seat position correction processing through use of a power feeder (see Patent Document 3 above) including a mover (sliding protector) that moves along a power feeding rail so as to adjust a pull-out amount of a wire harness housed in a harness housing (harness wind-up device) will be described.

Herein, description will be provided taking the first power feeder 56 included in the vehicle seat 1 of the fifteenth embodiment (see FIG. 17) as an example.

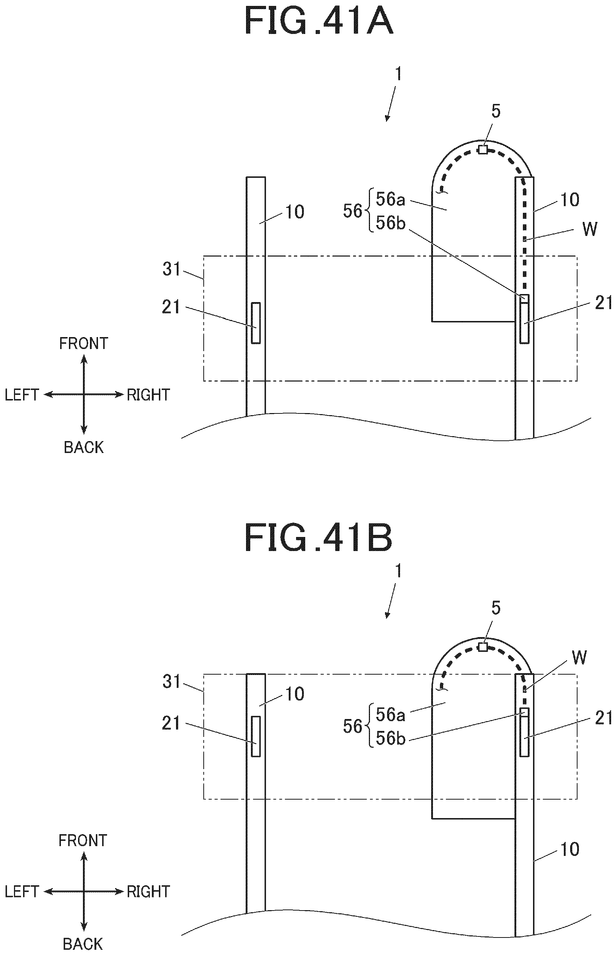

The first power feeder 56 of the vehicle seat 1 illustrated in FIG. 41A and FIG. 41B is similar to the first power feeder 56 of the fifteenth embodiment described earlier, and has the first harness housing 56a that houses the wire harness W such as by winding it up and the first mover 56b that moves along the lower rail 10 as the power feeding rail.

The first mover 56b of the first power feeder 56 is attached to the first upper rail 21. One end of the wire harness W is connected to the first mover 56b. The wire harness W is pulled out from or pulled back to the first harness housing 56a following the movement of the first mover 56b.

Specifically, the first mover 56b of the first power feeder 56 moves in the front-back direction in accordance with sliding of the first upper rail 21 (the first seat 31). When the first upper rail 21 moves backward along the lower rail 10 as illustrated in FIG. 41A, for example, the wire harness W connected to the first mover 56b is pulled out from the first harness housing 56a, so that the pull-out amount of the wire harness W pulled out from the first harness housing 56a increases in length.

When the first upper rail 21 moves forward along the lower rail 10 as illustrated in FIG. 41B, for example, the wire harness W connected to the first mover 56b is pulled back to the first harness housing 56a, so that the pull-out amount of the wire harness W pulled out from the first harness housing 56a decreases in length.

The first harness housing 56a of the first power feeder 56 includes a pull-out amount detection sensor 5 that detects the pull-out amount of the wire harness W. The pull-out amount detection sensor 5 is connected to the control device 60 and the power source 70 (see FIG. 1) through predetermined wires. Note that the other end of the wire harness W is also connected to the control device 60 and the power source 70 (see FIG. 1) through predetermined wires.

This pull-out amount detection sensor 5 has the function of detecting the pull-out amount of the wire harness W pulled out from the first harness housing 56a and outputting data on the pull-out amount to the control device 60.

Note that the storage unit of the control device 60 stores a predetermined table in which positional information on the first seat 31 and the second seat 32 on the lower rails 10 and the data on the pull-out amount of the wire harness W pulled out from the first harness housing 56a or the second harness housing 57a are associated with each other, for example.

Note that although not illustrated herein, the second mover 57b (the fifteenth embodiment, see FIG. 17) of the second power feeder 57 of the vehicle seat 1 moves in the front-back direction in accordance with sliding of the second upper rail 22 (the second seat 32). When the second upper rail 22 moves forward along the lower rail 10, the wire harness W connected to the second mover 57b is pulled out from the second harness housing 57a, so that the pull-out amount of the wire harness W pulled out from the second harness housing 57a increases in length. When the second upper rail 22 moves backward along the lower rail 10, the wire harness W connected to the second mover 57b is pulled back to the second harness housing 57a, so that the pull-out amount of the wire harness W pulled out from the second harness housing 57a decreases in length. The second harness housing 57a of this second power feeder 57 also includes the pull-out amount detection sensor 5 that detects the pull-out amount of the wire harness W.

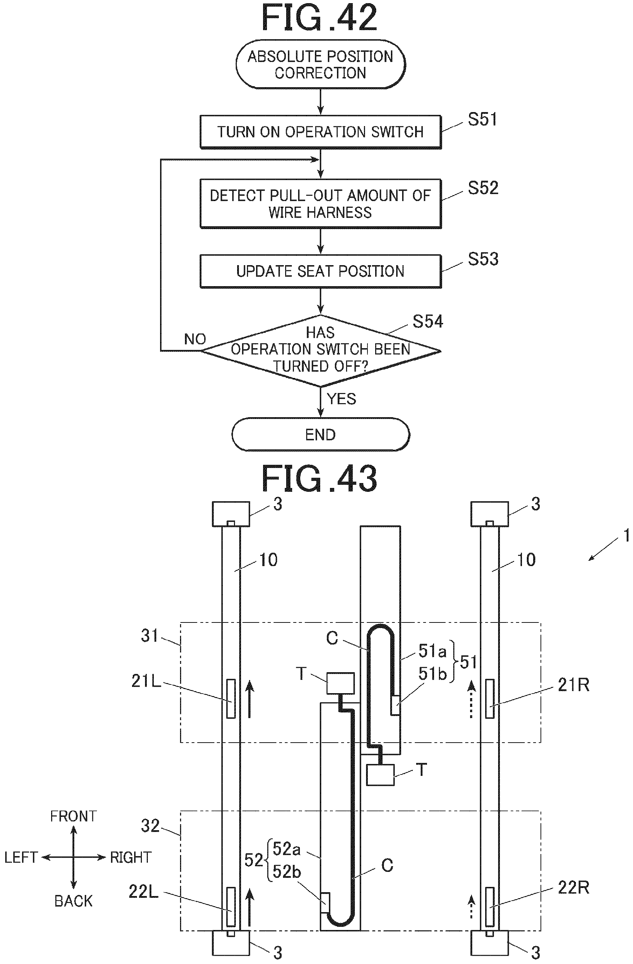

Seat position correction processing in this vehicle seat 1 will be described based on the flowchart illustrated in FIG. 42.

First, a sliding seat operation switch (the electric component 40; see FIG. 1) is operated (step S51).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward.

At this time, the positional information on the seat is counted in accordance with the pulses of the motors, and the positional information is updated as needed.

When the seat (31, 32) moves forward or backward, the pull-out amount detection sensor 5 is actuated to detect the pull-out amount of the wire harness W pulled out from the harness housing (56a, 57a) (step S52).

Positional information on the first seat 31 and the second seat 32 on the lower rails 10 is acquired based on data on the pull-out amount of the wire harness W detected by the pull-out amount detection sensor 5 and the predetermined table, and the positional information on the seats is updated (step S53).

If the operation switch (the electric component 40) is operated (step S54; NO), detection of strains of the lower rails 10 and updating of the seat positions are repeated, and when operation of the operation switch (the electric component 40) is finished (step S54; YES), the seat position correction processing is terminated.

As described, an error in positional information caused by pulse counting can be complemented by performing correction for updating the absolute position of the first seat 31 or the second seat 32 based on data on the pull-out amount of the wire harness W detected by the pull-out amount detection sensor 5 in addition to updating of the positional information by counting pulses of the electric motors. This enables the position of each seat (31, 32) to be detected more accurately.

### [Synchronous Driving Control Over Paired Drives]

Next, a technology for synchronously driving the drives M for sliding each of the seats 30 included in the vehicle seat 1 back and forth, the drives M being located in a pair of left and right upper rails 20 coupled to the seat 30, will be described.

As described earlier, the vehicle seat 1 includes the pair of lower rails 10 arranged in parallel to each other as well as the first upper rails 21 and the second upper rails 22. Each upper rail 21 and second upper rail 22 is arranged on the lower rail 10 which is each of the pair of lower rails 10 to be aligned in the longitudinal direction of the lower rail 10 and are movable along the lower rail 10. The first seat 31 is coupled to the first upper rails 21 arranged closer to the front of the lower rails 10, and the second seat 32 is coupled to the second upper rails 22 arranged closer to the back of the lower rails 10.

That is, the first seat 31 and the second seat 32 are each arranged to straddle the pair of left and right lower rails 10. The pair of left and right first upper rails 21 are coupled to the first seat 31 which is a front seat, and the pair of left and right second upper rails 22 are coupled to the second seat 32 which is a rear seat.

Electric motors as the drives M (see FIG. 1) are respectively located in the first upper rails 21 and the second upper rails 22, and the first seat 31 and the second seat 32 respectively slide back and forth by driving of the electric motors.

As described, the respective seats (31, 32) are slid by driving of the electric motors located in the pair of left and right upper rails (21, 22). Electric motors have differences in driving performance due to individual differences, differences in degradation over time, or the like. Thus, in a case of asynchronization such as an excessively great difference in rotational speed between the left and right electric motors, for example, such a failure in which the seat (31, 32) is stuck (becomes immovable) might occur.

A technology for synchronously driving the paired drives M (electric motors) so as not to produce such a failure will be described below.

### (Synchronous Driving Of Left And Right Electric Motors Through Use Of TOF Sensors)

Synchronous driving of left and right electric motors (the drives M) through use of the TOF sensors 3 will be described.

The vehicle seat 1 illustrated in FIG. 43 includes the TOF sensors 3 for detecting positions of first upper rails 21L, 21R and second upper rails 22L, 22R that slide back and forth in the longitudinal direction of the lower rails 10.

Herein, a configuration in which the TOF sensors 3 for upper rail detection are located in the vehicle seat 1 of the third embodiment (see FIG. 4) is illustrated.

Specifically, the TOF sensors 3 that detect the positions of the first upper rails 21L, 21R are located on the front end side of the lower rails 10. The TOF sensors 3 irradiate the first upper rails 21L, 21R with laser to detect the positions of the first upper rails 21L, 21R. In particular, the TOF sensor 3 on the front end of the lower rail 10 on the left side in the drawing detects the position of the first upper rail 21L, and the TOF sensor 3 on the front end of the lower rail 10 on the right side in the drawing detects the position of the first upper rail 21R.

The TOF sensors 3 that detect the positions of the second upper rails 22L, 22R are located on the back end side of the lower rails 10. The TOF sensors 3 irradiate the second upper rails 22L, 22R with laser to detect the positions of the second upper rails 22L, 22R. In particular, the TOF sensor 3 on the back end of the lower rail 10 on the left side in the drawing detects the position of the second upper rail 22L, and the TOF sensor 3 on the back end of the lower rail 10 on the right side in the drawing detects the position of the second upper rail 22R.

Note that the configuration and operation of the TOF sensors 3 of the laser ranging type are similar to those of conventionally known TOF sensors, and are thus not described herein in detail.

The TOF sensors 3 are connected to the control device 60 and the power source 70 (see FIG. 1) through predetermined wires.

The TOF sensors 3 have the function of respectively detecting the positions of the first upper rails (21L, 21R) and the positions of the second upper rails (22L, 22R) on the lower rails 10 and outputting data on their positions to the control device 60.

The electric motors as the drives M located in the respective upper rails are also connected to the control device 60 and the power source 70 (see FIG. 1) through predetermined wires.

Operation of each of the electric motors in the respective upper rails is controlled by the control device 60.

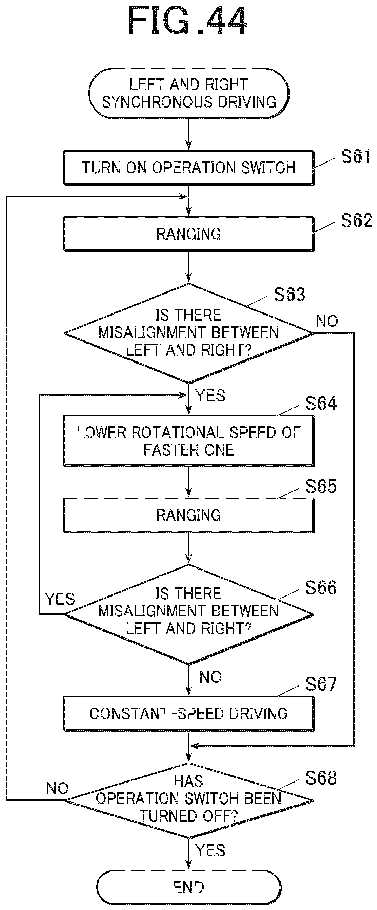

Synchronous driving of the left and right electric motors in this vehicle seat 1 will be described based on the flowchart illustrated in FIG. 44.

Herein, description will be provided taking, as an example, a case in which in the pair of left and right second upper rails (22L, 22R) coupled to the second seat 32 of the vehicle seat 1 illustrated in FIG. 43, the rotational speed of the electric motor in the right second upper rail 22R becomes lower than the rotational speed of the electric motor in the left second upper rail 22L.

First, a sliding seat operation switch (the electric component 40; see FIG. 1) is operated (step S61).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward.

When the seat (31, 32) moves forward or backward, the TOF sensors 3 are actuated to measure the distances to the first upper rails (21L, 21R) and the second upper rails (22L, 22R), thereby respectively detecting the positions of the respective upper rails (step S62).

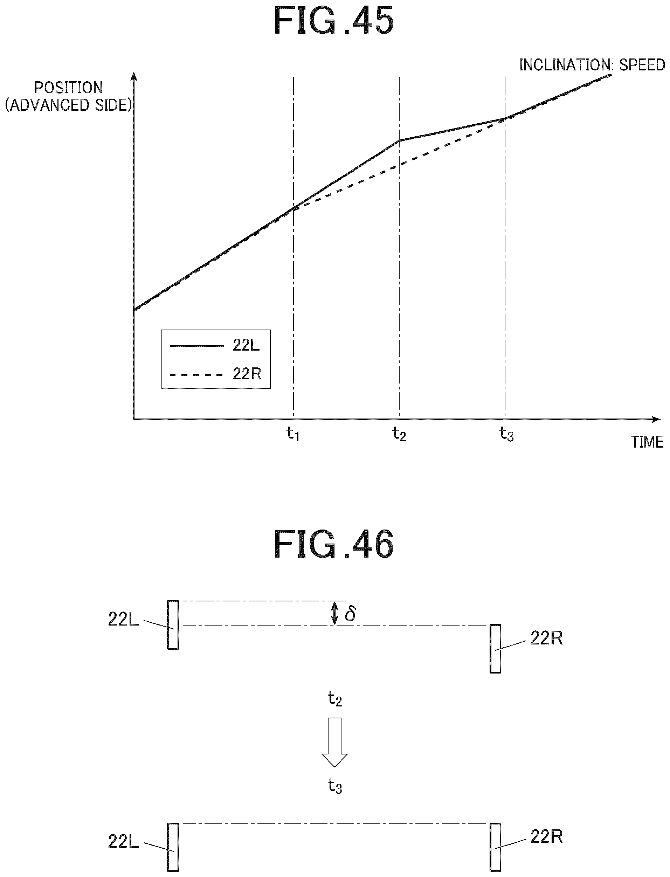

In a case in which it is determined through ranging performed by the TOF sensors 3 that a difference in position between the left second upper rail 22L and the right second upper rail 22R exceeds a predetermined threshold value (δ) (see a time t₂ in FIG. 45, and FIG. 46) and that the left second upper rail 22L is present at a position on the advanced side with respect to the right second upper rail 22R (step S63; YES), it is determined that the rotational speed of the electric motor in the right second upper rail 22R has decreased and the rotational speed of the electric motor in the left second upper rail 22L is higher.

Based on this determination, the rotational speed of the electric motor in the left second upper rail 22L, operation of which is controlled by the control device 60, is lowered (step S64).

Measurement of distances (ranging) to the upper rails by the TOF sensors 3 is performed continuously (step S65).

When it is determined through the ranging performed by the TOF sensors 3 in step S65 that there is still a difference in position between the left second upper rail 22L and the right second upper rail 22R (step S66; YES), the process returns to step S64.

On the other hand, when it is determined through the ranging performed by the TOF sensors 3 in step S65 that there is no difference in position between the left second upper rail 22L and the right second upper rail 22R (see a time t₃ in FIG. 45, and FIG. 46) (step S66; NO), the seat is moved forward or backward by constant-speed driving of maintaining the rotational speed of the electric motors at that point of time (step S67).

If the operation switch (the electric component 40) is operated (step S68; NO), the process returns to step S62. When operation of the operation switch (the electric component 40) is finished (step S68; YES), the processing of synchronously driving the left and right electric motors is terminated.

As described, in such a case in which a difference in position arises between the paired left and right upper rails (in the present example, the second upper rails 22L, 22R) coupled to a seat (in the present example, the second seat 32), the respective electric motors can be synchronized by performing processing of lowering the rotational speed of the electric motor in the upper rail (22L) which has become relatively faster assuming that the rotational speed of the electric motor in the delayed upper rail (22R) decreases, thereby synchronously driving the paired left and right electric motors (the drives M). This enables smooth sliding of the seat.

Note that in the present example, in the case in which it is determined through the ranging performed by the TOF sensors 3 that a difference in position has arisen between the left and right upper rails, the paired left and right electric motors are driven synchronously by lowering the rotational speed of a faster one of the electric motors in the left and right upper rails, but the present invention is not limited to this.

For example, the respective electric motors may be synchronized by monitoring the rotational speeds of the electric motors in the left and right upper rails and in the case in which a difference in rotational speed has arisen between the left and right electric motors, performing processing of lowering the rotational speed of the electric motor which has become relatively faster without performing the ranging by the TOF sensors 3, thereby synchronously driving the paired left and right electric motors (the drives M) .

### (Synchronous Driving At Start-Up And At Stop Of Left And Right Electric Motors)

Synchronous driving at the start-up and at the stop of the left and right electric motors (the drives M) will be described.

As described above, electric motors have differences in driving performance due to individual differences, differences in degradation over time, or the like.

In particular, the respective electric motors are likely to differ in driving torque and inertia at the start-up and at the stop of the electric motors. This may cause a difference in position between the left and right upper rails.

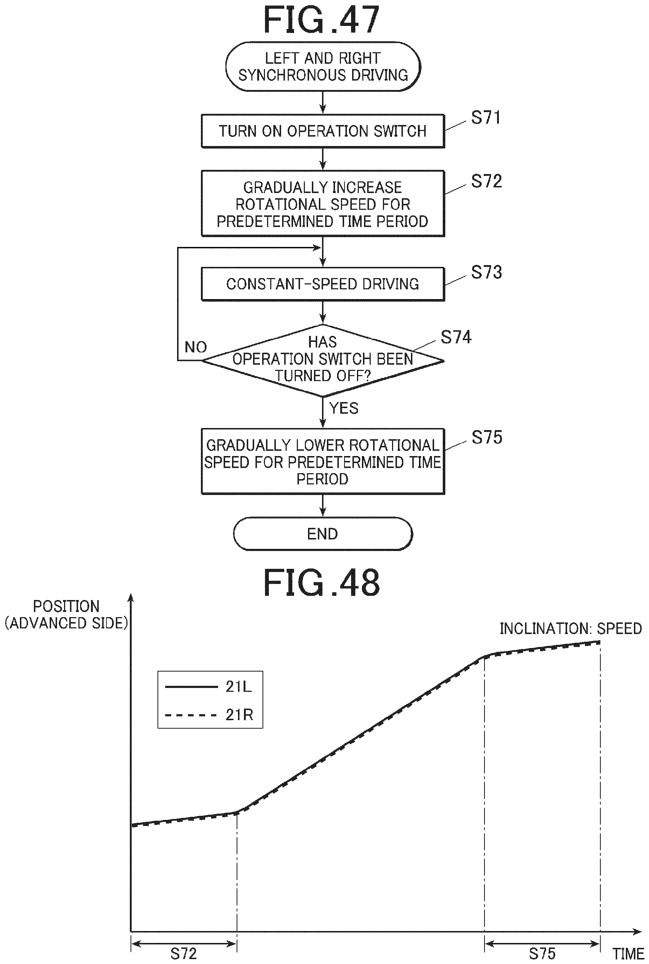

In the present example, synchronous driving of the left and right electric motors will be described based on the flowchart illustrated in FIG. 47 taking, as an example, the pair of left and right first upper rails (21L, 21R) coupled to the first seat 31 of the vehicle seat 1 illustrated in FIG. 43.

First, a sliding seat operation switch (the electric component 40; see FIG. 1) is operated (step S71).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward.

Operation control of gradually increasing the rotational speed of the electric motors in the pair of left and right first upper rails (21L, 21R) is performed for a predetermined time period (for two seconds, for example) from timing when the operation is performed (step S72; see FIG. 48).

After the lapse of the predetermined time period, the seat is moved forward or backward by constant-speed driving in which the electric motors maintain a predetermined rotational speed (step S73).

If the operation switch (the electric component 40) is operated (step S74; NO), the process returns to step S73.

On the other hand, when operation of the operation switch (the electric component 40) is finished (step S74; YES), operation control of gradually lowering the rotational speed of the electric motors in the pair of left and right first upper rails (21L, 21R) for a predetermined time period (for two seconds, for example) from timing when the operation is finished to stop the electric motors (step S75; see FIG. 48), and the processing of synchronously driving the left and right electric motors is terminated.

As described, by subjecting the electric motors in the paired left and right upper rails (in the present example, the first upper rails 21L, 21R) coupled to a seat (in the present example, the first seat 31) to control of gradually increasing the rotational speed at the start-up of the electric motors caused by performing the operation of sliding the seat (turning the operation switch on) and control of gradually lowering the rotational speed at the stop of the electric motors caused by performing the operation of stopping the sliding of the seat (turning the operation switch off), a difference in driving torque or inertia can be prevented from arising between the left and right electric motors, and the left and right electric motors (the drives M) can be driven synchronously. This enables smooth sliding of the seat.

### (Synchronous Driving Of Left And Right Electric Motors Through Physical Restraint)

Synchronous driving of the left and right electric motors (the drives M) through physical restraint will be described.

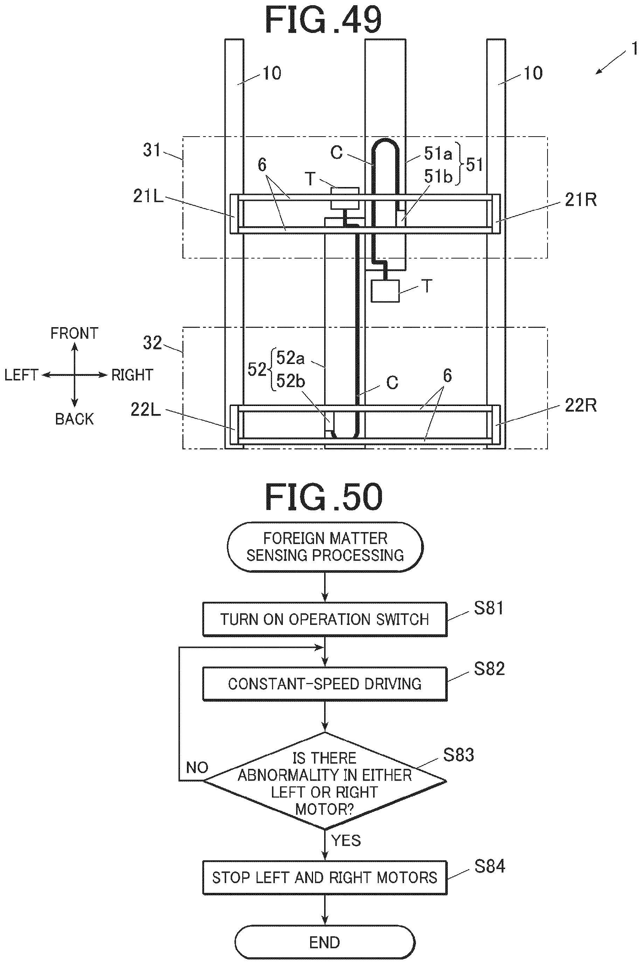

The vehicle seat 1 illustrated in FIG. 49 includes the first upper rails 21L, 21R coupled to the first seat 31 that slides back and forth in the longitudinal direction of the lower rails 10 and the second upper rails 22L, 22R coupled to the second seat 32. The paired left and right first upper rails 21L, 21R are coupled to each other with coupling members 6, and the paired left and right second upper rails 22L, 22R are coupled to each other with the coupling members 6.

Herein, a configuration in which the coupling members 6 are located on the upper rails of the vehicle seat 1 of the third embodiment (see FIG. 4) is illustrated.

Specifically, the coupling members 6 straddling a front end portion of the left first upper rail 21L and a front end portion of the right first upper rail 21R and having both ends fixed to the upper rails as well as the coupling members 6 straddling a back end portion of the left first upper rail 21L and a back end portion of the right first upper rail 21R and having both ends fixed to the upper rails are located.

The two coupling members 6 coupled to the front and back of the first upper rails are fixed to be parallel to each other.

The coupling members 6 straddling a front end portion of the left second upper rail 22L and a front end portion of the right second upper rail 22R and having both ends fixed to the upper rails as well as the coupling members 6 straddling a back end portion of the left second upper rail 22L and a back end portion of the right second upper rail 22R and having both ends fixed to the upper rails are located.

The two coupling members 6 coupled to the front and back of the second upper rails are fixed to be parallel to each other.

The coupling members 6 are elongated beam-like members having rigidity and rigidly couple the left and right upper rails (21L and 21R, 22L and 22R) fixed to their both ends.

In particular, since the left and right upper rails are coupled by the two coupling members 6, the left and right upper rails are restrained strongly by the coupling members 6.

As described, by physically restraining the left and right upper rails by the coupling members 6, the left and right upper rails can be moved in such a manner that a difference in position does not arise therebetween even in such a case in which a difference in rotational speed arises between the electric motors in the left and right upper rails. This enables the left and right electric motors (the drives M) to be apparently driven synchronously to slide the seat.

### [Foreign Matter Sensing Processing]

Next, processing in a case in which there is a foreign matter F that obstructs movement of the upper rail 20 on the lower rail 10 on one side of the vehicle seat 1 will be described.

### (Foreign Matter Sensing Processing Based On Load On Electric Motor)

For example, in such a case in which the foreign matter F adheres onto the lower rail 10 or the foreign matter F enters the inside of the lower rail 10 to obstruct movement of the upper rail 20, the load on the electric motor (the drive M) that slides the upper rail 20 increases.

That is, the fact that the load on the electric motor has increased can be used as a criterion for determining an event that sliding of the upper rail 20 is obstructed.

Specifically, the control device 60 can determine that the foreign matter F that obstructs movement of the upper rail 20 is present based on the fact that the load on the electric motor (the drive M) has increased to exceed a current threshold value in the electric motor or a fact that the pulse interval of the electric motor has become longer than a predetermined value.

Such foreign matter sensing processing based on the load on the electric motor will be described below.

In the present example, the foreign matter sensing processing based on the load on the electric motors in the pair of left and right first upper rails (21L, 21R) coupled to the first seat 31 of the vehicle seat 1 illustrated in FIG. 43 will be described based on the flowchart illustrated in FIG. 50.

First, a sliding seat operation switch (the electric component 40; see FIG. 1) is operated (step S81).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward.

For example, the first seat 31 is moved forward or backward by constant-speed driving in which the electric motors in the pair of left and right first upper rails (21L, 21R) maintain the predetermined rotational speed (step S82).

In a case in which through monitoring of the load on the electric motors by the control device 60, an abnormality in which the load on either the left or right electric motor in the pair of left and right first upper rails (21L, 21R) increases is sensed (step S83; YES), the left and right electric motors are stopped (step S84).

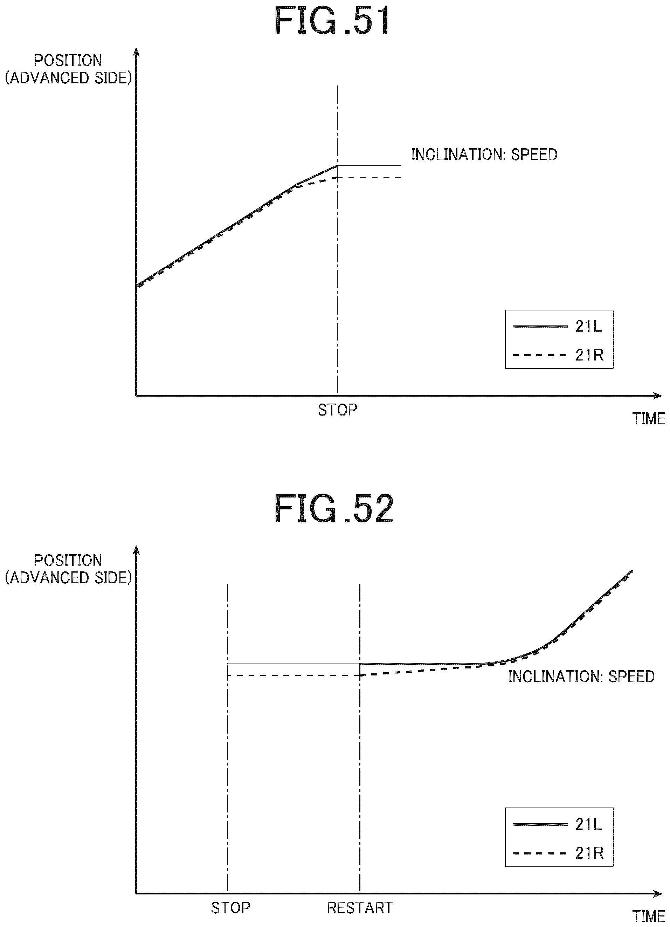

In the present example, as illustrated in FIG. 51, for example, it is assumed that an abnormality of the electric motor in the right first upper rail 21R is sensed, and movement of the right first upper rail 21R is obstructed when the first seat 31 is moved forward.

As described, in the case in which an abnormality is found in either of the left and right electric motors (the drives M) that slide the paired left and right upper rails (in the present example, the first upper rails 21L, 21R) coupled to a seat (in the present example, the first seat 31), the left and right electric motors can be stopped immediately assuming that the foreign matter F that obstructs movement of the upper rail (21R) is present.

This can prevent driving from being continued without the presence of the foreign matter F recognized to damage the electric motors, the upper rails, and the like.

### <"Post-Processing" Of Foreign Matter Sensing Processing Based On Load On Electric Motor>

After the abnormality in which the load on either of the left and right electric motors (the drives M) increases is sensed, and the left and right electric motors are stopped to stop the first seat 31 assuming that the foreign matter F that obstructs movement of the upper rail (21R) is present, it is checked whether or not the foreign matter F is present around the upper rail (21R), and the foreign matter F, if present, is removed.

Thereafter, driving processing (post-processing) at the restart when the first seat 31 is moved forward or backward will be described.

### <Restart; Move-Forward Driving>

In the case in which movement of the right first upper rail 21R is obstructed when the first seat 31 is moved forward as illustrated in FIG. 51, the right first upper rail 21R is present at a position slightly delayed from the left first upper rail 21L.

Thus, in a case in which the first seat 31 is moved forward at the restart, timing at which only the electric motor in the right first upper rail 21R is driven is set to solve the misalignment, and the left and right electric motors are then driven to move the first seat 31 forward, as illustrated in FIG. 52, for example.

### <Restart; Move-Backward Driving>

In the case in which movement of the right first upper rail 21R is obstructed when the first seat 31 is moved forward as illustrated in FIG. 51, the right first upper rail 21R is present at a position slightly delayed from the left first upper rail 21L.

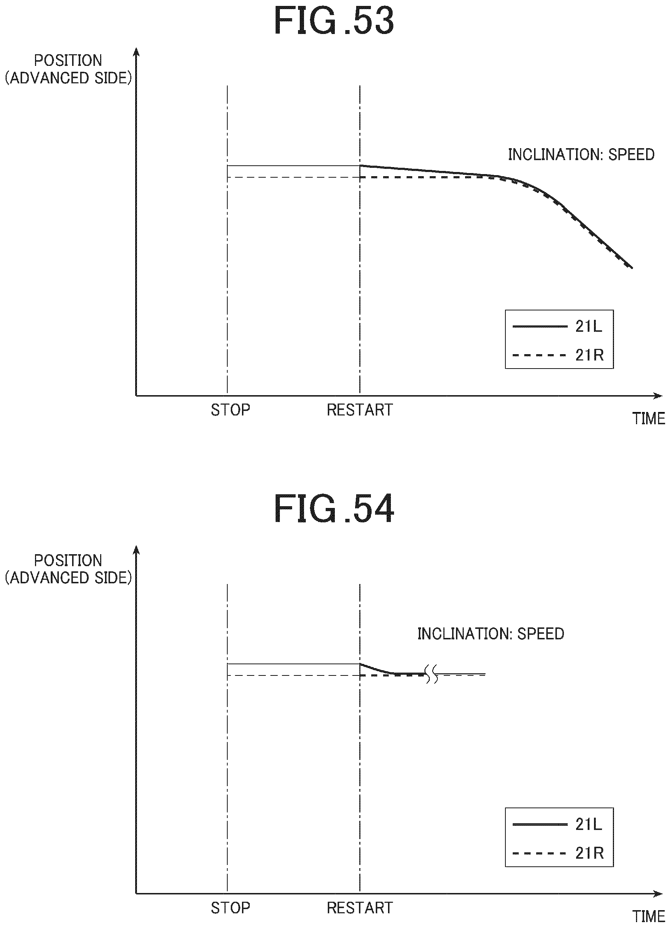

Thus, in a case in which the first seat 31 is moved backward at the restart, timing at which only the electric motor in the left first upper rail 21L is driven is set to solve the misalignment, and the left and right electric motors are then driven to move the first seat 31 backward, as illustrated in FIG. 53, for example.

### <Restart; Counterrotation>

In the case in which movement of the right first upper rail 21R is obstructed when the first seat 31 is moved forward as illustrated in FIG. 51, the left first upper rail 21L is present at a position slightly advanced from the right first upper rail 21R.

Thus, at the restart, the electric motor in the left first upper rail 21L is counterrotated to align the advanced left first upper rail 21L with the right first upper rail 21R as illustrated in FIG. 54, for example. After solving the misalignment, the left and right electric motors are driven to move the first seat 31 forward or backward.

### (Foreign Matter Sensing Processing Through Use Of TOF Sensors)

Like the above-described vehicle seat 1 in FIG. 43, some seats include the TOF sensors 3 for detecting the positions of the first upper rails 21L, 21R and the second upper rails 22L, 22R that slide back and forth in the longitudinal direction of the lower rails 10.

In this vehicle seat 1, the position of each of the upper rails is detected by the TOF sensor 3 in order to perform drive control based on a slight difference in position between the left and right upper rails coupled to a seat.

Such foreign matter sensing processing through use of the TOF sensors 3 will be described below.

In such a case in which the left and right TOF sensors 3 detect the positions of the left and right upper rails coupled to a seat as in the vehicle seat 1 illustrated in FIG. 43, a difference in position, if produced between the left and right upper rails, is less than or equal to 10 mm, for example.

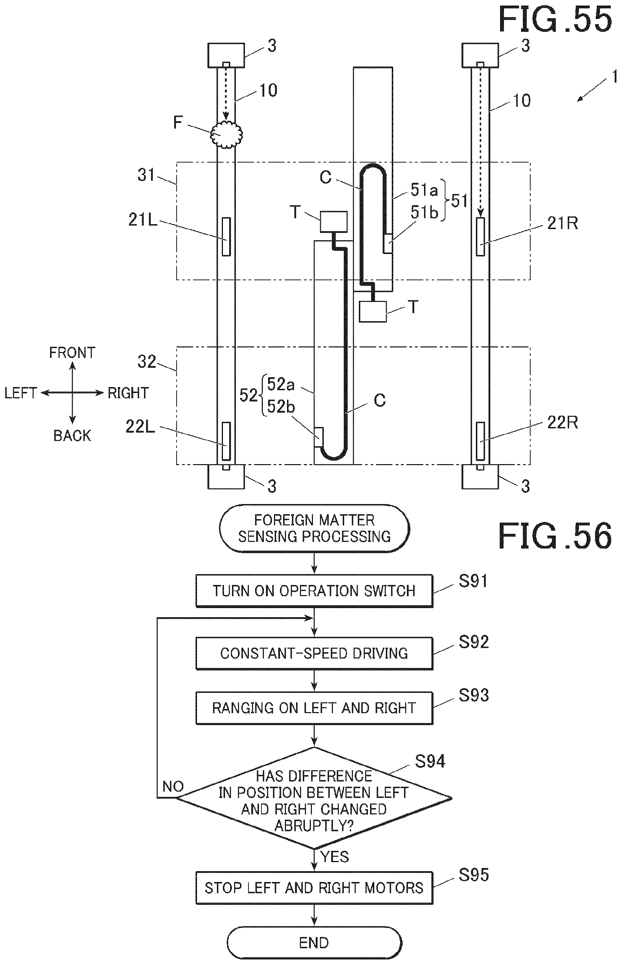

In contrast, when the foreign matter F enters a measurement region of the TOF sensor 3 on the front end of the lower rail 10 on the left side in the drawing as in the vehicle seat 1 illustrated in FIG. 55, for example, the TOF sensor 3 detects the foreign matter F which is closer than the first upper rail 21L and detects the position of the foreign matter F as the position of the first upper rail 21L.

There is a great difference between a distance (for example, 500 mm) to the foreign matter F as the first upper rail 21L detected by the left upper TOF sensor 3 in FIG. 55 and a distance (for example, 1500 mm) to the first upper rail 21R detected by the right upper TOF sensor 3 in FIG. 55. The difference (for example, 1000 mm) is an impossible value as a difference in position between the left and right upper rails (21L, 21R).

Based on the fact that such an impossible value has been detected as the difference in position between the left and right upper rails, the control device 60 can determine that the foreign matter F is present in a moving region of the upper rail (21L).

In the present example, foreign matter sensing processing taking, as an example, ranging of the pair of left and right first upper rails (21L, 21R) coupled to the first seat 31 of the vehicle seat 1 illustrated in FIG. 55 will be described based on the flowchart illustrated in FIG. 56.

First, a sliding seat operation switch (the electric component 40; see FIG. 1) is operated (step S91).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward.

For example, the first seat 31 is moved forward or backward by constant-speed driving in which the electric motors in the pair of left and right first upper rails (21L, 21R) maintain the predetermined rotational speed (step S92).

When the first seat 31 moves forward or backward, the left and right TOF sensors 3 are actuated to measure the distances to the first upper rails (21L, 21R) (step S93).

In a case in which the difference between values obtained by ranging performed by the left and right TOF sensors 3 (the difference in position between the left and right) is less than or equal to a threshold value (there is little difference) (step S94; NO) through monitoring performed by the control device 60, the process returns to step S92.

On the other hand, in a case in which it is sensed through monitoring performed by the control device 60 that the difference between values obtained by ranging performed by the left and right TOF sensors 3 (the difference in position between the left and right) has changed abruptly or that the difference between values obtained by ranging performed by the left and right TOF sensors 3 (the difference in position between the left and right) is excessively great (step S94; YES), the left and right electric motors are stopped (step S95).

In the present example, as illustrated in FIG. 55, for example, an abnormality of the difference in position between the left and right upper rails caused by the foreign matter F having entered the measurement region of the left upper TOF sensor 3 in the drawing is sensed.

As described, the positions of the paired left and right upper rails (in the present example, the first upper rails 21L, 21R) coupled to a seat (in the present example, the first seat 31) are detected by the TOF sensors 3. In the case in which an abnormality is found in the difference in position between the left and right upper rails, the left and right electric motors can be stopped immediately assuming that the foreign matter F that obstructs movement of either upper rail (21L) is present.

This can prevent driving from being continued without the presence of the foreign matter F recognized to damage the upper rails, the electric motors, and the like.

Note that in a case in which it is assumed that the foreign matter F that obstructs movement of the upper rail runs on the lower rail 10, the TOF sensor 3 should only perform ranging of radiating laser toward portions of the upper rail exposed to the outside of the lower rail 10.

In a case in which it is assumed that the foreign matter F that obstructs movement of the upper rail enters the lower rail 10, the TOF sensor 3 should only perform ranging of radiating laser toward portions of the upper rail within the lower rail 10.

Ranging may be performed on both sides of the inside and outside of the lower rail 10.

### [Processing Of Restricting Proximation Of Front And Rear Seats]

Next, processing of restricting driving so as to prevent the front and rear seats 30 in the vehicle seat 1 from becoming excessively proximate to each other will be described.

### (Seat Driving Restriction Processing Through Use Of Proximity Switches)

Seat driving restriction processing through use of proximity switches 7 will be described.

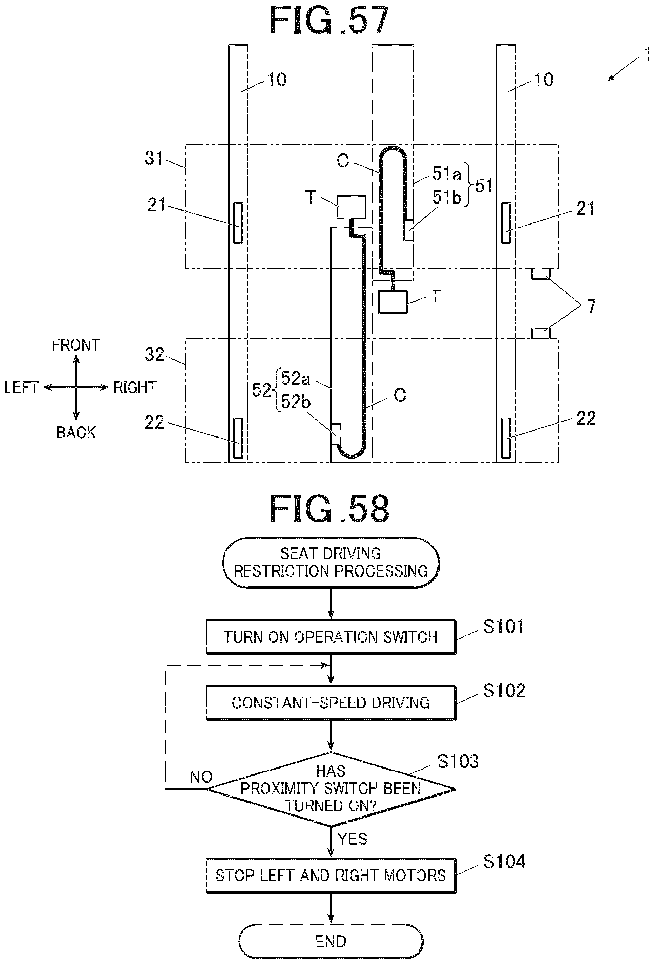

The vehicle seat 1 illustrated in FIG. 57 includes the proximity switches 7 for preventing the first seat 31 and the second seat 32 that slide back and forth in the longitudinal direction of the lower rails 10 from becoming excessively proximate to each other.

Herein, a configuration in which the proximity switches 7 are located in the vehicle seat 1 of the third embodiment (see FIG. 4) is illustrated.

Specifically, the proximity switches 7 are located respectively on a back surface part of the first seat 31 and a front surface part of the second seat 32.

The proximity switches 7 of the first seat 31 and the second seat 32 are located at positions to abut on and press each other when the first seat 31 and the second seat 32 become proximate to each other at a predetermined distance (for example, 10 mm).

The proximity switches 7 are connected to the control device 60 and the power source 70 (see FIG. 1) through predetermined wires.

Note that a configuration may be adopted in which either one of the two proximity switches 7 is a dummy switch, and the proximity switch 7 abutted when the first seat 31 and the second seat 32 become proximate to each other at the predetermined distance is pressed by the dummy switch.

The seat driving restriction processing in this vehicle seat 1 will be described based on the flowchart illustrated in FIG. 58.

First, a sliding seat operation switch (the electric component 40; see FIG. 1) is operated (step S101).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward. For example, each of the seats (31, 32) is moved forward or backward by constant-speed driving in which the electric motors maintain the predetermined rotational speed (step S102) .

In a case in which it is sensed by the control device 60 that the proximity switches 7 have been pressed (step S103; YES), the left and right electric motors are stopped (step S104) .

As described, when the first seat 31 and the second seat 32 of the vehicle seat 1 become proximate to each other and the proximity switches 7 are pressed, the left and right electric motors are stopped to stop sliding of the seat. This can prevent the first seat 31 and the second seat 32 from hitting each other.

### (Seat Driving Restriction Processing Through Use Of Limit Switches)

Seat driving restriction processing through use of limit switches 8 will be described.

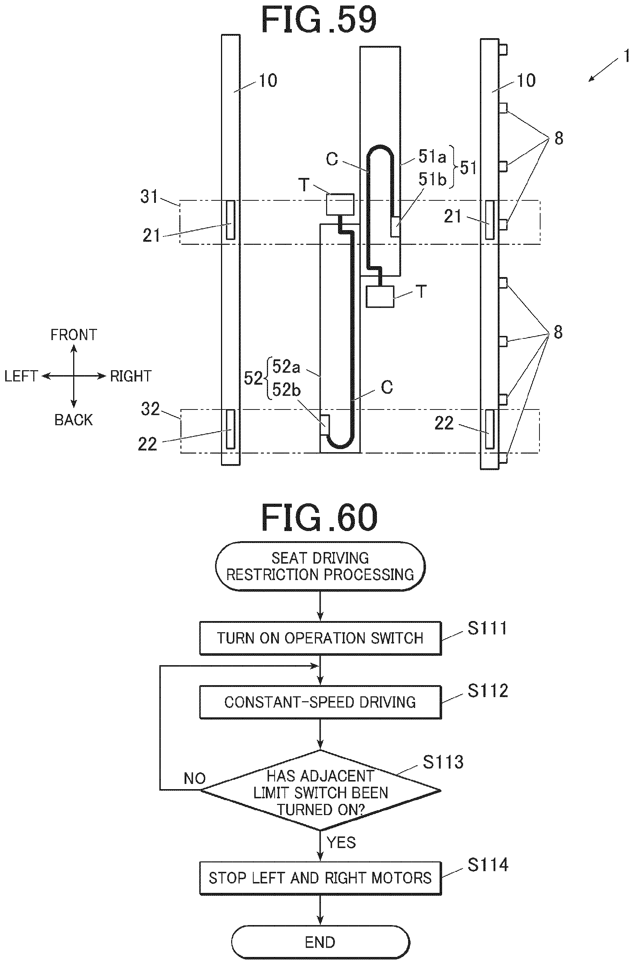

The vehicle seat 1 illustrated in FIG. 59 includes the limit switches 8 for preventing the first seat 31 and the second seat 32 that slide back and forth in the longitudinal direction of the lower rails 10 from becoming excessively proximate to each other.

Herein, a configuration in which the limit switches 8 are located in the vehicle seat 1 of the third embodiment (see FIG. 4) is illustrated. Note that the first seat 31 and the second seat 32 are illustrated in reduced size for the sake of convenience.

In the present example, the plurality of limit switches 8 are located at regular intervals along a side surface of the lower rail 10 on the right side in the drawing.

The limit switches 8 are connected to the control device 60 and the power source 70 (see FIG. 1) through predetermined wires.

When any of the plurality of limit switches 8 comes into contact with the seat (31, 32) on the lower rail 10, the position of the seat (31, 32) on the lower rail 10 can be specified in association with the position of the limit switch 8.

Seat driving restriction processing in this vehicle seat 1 will be described based on the flowchart illustrated in FIG. 60.

First, a sliding seat operation switch (the electric component 40; see FIG. 1) is operated (step S111).

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward. For example, each of the seat (31, 32) is moved forward or backward by constant-speed driving in which the electric motors maintain the predetermined rotational speed (step S112) .

In a case in which it is sensed by the control device 60 that the adjacent limit switch 8 has been turned on (step S113; YES), the left and right electric motors are stopped (step S114).

As described, when the first seat 31 and the second seat 32 of the vehicle seat 1 become proximate to each other, and the adjacent limit switch 8 is turned on, the left and right electric motors are stopped to stop sliding of the seat. This can prevent the first seat 31 and the second seat 32 from hitting each other.

Note that rather than stopping the left and right electric motors to stop sliding of a seat, driving of the electric motors or the like may be restricted in such a manner that the seat does not move further.

### (Seat Driving Restriction Processing Through Use Of Sensing Of Overload On Electric Motors)

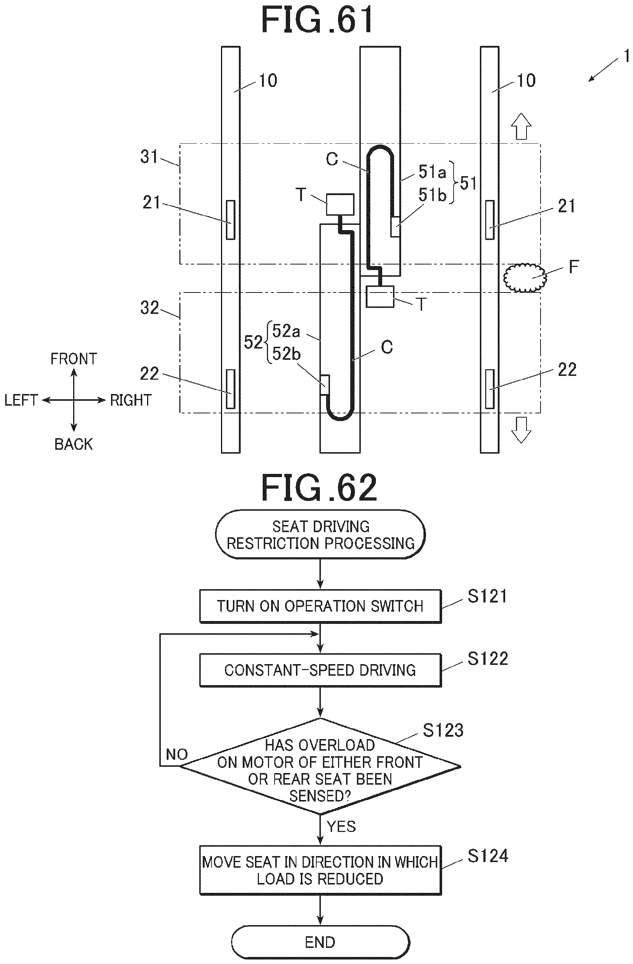

In a case in which the first seat 31 is moved backward, the second seat 32 is moved forward, or backward movement of the first seat 31 and forward movement of the second seat 32 are performed simultaneously as in the vehicle seat 1 illustrated in FIG. 61, for example, the foreign matter F may be held between the first seat 31 and the second seat 32.

In the case in which the foreign matter F is held between the first seat 31 and the second seat 32, overload in which, in at least one of the seats (31, 32), the load on the electric motors (the drives M) in the upper rails (21, 22) that are going to move the seat increases is sensed by the control device 60.

That is, the fact that the load on the electric motors has increased can be used as a criterion for determining the event in which the foreign matter F is held between the first seat 31 and the second seat 32.

Such seat driving restriction processing through use of sensing of overload on the electric motors will be described below.

In the present example, the seat driving restriction processing through use of sensing of overload on the electric motors will be described based on the flowchart illustrated in FIG. 62 with reference to the vehicle seat 1 illustrated in FIG. 61.

The seat driving restriction processing in this vehicle seat 1 will be described based on the flowchart illustrated in FIG. 62.

First, a sliding seat operation switch (the electric component 40; see FIG. 1) is operated (step S121) .

In the case in which the operation is the forward switch, the electric motors as the drives M rotate clockwise to move the seat (31, 32) forward. In the case in which the operation is the reverse switch, the electric motors as the drives M counterrotate to move the seat (31, 32) backward. For example, each of the seats (31, 32) is moved forward or backward by constant-speed driving in which the electric motors maintain the predetermined rotational speed (step S122) .

In the case in which overload on the electric motors caused by the fact that the foreign matter F has been held between the first seat 31 and the second seat 32 is sensed by the control device 60 (step S123; YES), at least one of the seats (31, 32) is moved in a direction in which the load on the electric motors is reduced and stopped after movement by a predetermined length (step S124). Note that it is preferable that the one of the seats having been operated to be moved forward or backward should be moved.

In the case in which the foreign matter F is held between the first seat 31 and the second seat 32, actually, the first seat 31 is moved forward, or the second seat 32 is moved backward.

As described, in the case in which the foreign matter F is held between the first seat 31 and the second seat 32 of the vehicle seat 1, at least one of the seats can be moved in the direction in which the first seat 31 and the second seat 32 are separated. This can prevent driving from being continued without the presence of the foreign matter F recognized to damage the electric motors, the seats, and the like.

Note that the vehicle seat 1 has been described in the above embodiment citing various embodiments and examples, but the present invention is not limited to this, and any combination of those embodiments and examples may be implemented.

Besides, it goes without saying that the specific detailed structures and the like can also be changed as appropriate.

### Industrial Applicability

The present invention can be utilized as an electrically slidable vehicle seat.

### Reference Signs List

- 1: vehicle seat
- 10: lower rail
- 20: upper rail
- 30: seat
- 40: electric component (operation switch)
- 50: power feeder
- 60: control device
- 70: power source
- 21 (21L, 21R): first upper rail
- 22 (22L, 22R): second upper rail
- 31: first seat
- 32: second seat
- 51: first power feeder
- 51a: first power feeding rail
- 51b: first mover
- 52: second power feeder
- 52a: second power feeding rail
- 52b: second mover
- 50a: power feeding rail (common power feeding rail)
- 56: first power feeder
- 56a: first harness housing
- 56b: first mover
- 57: second power feeder
- 57a: second harness housing
- 57b: second mover
- 80: seat detection sensor
- 81: first seat detection sensor
- 82: second seat detection sensor
- 90: seat attaching/detaching mechanism
- 91: front lock
- 92: back lock
- 101: first striker
- 102: second striker
- 2: power feeding connection structure
- 2a: first connector
- 2b: second connector
- 3: TOF sensor
- 4: strain detection sensor
- 5: pull-out amount detection sensor
- 6: coupling member
- 7: proximity switch
- 8: limit switch
- M: drive (electric motor)
- C: flexible flat cable
- T: terminal
- W: wire harness
- F: foreign matter

## Claims

1. A vehicle seat comprising:
a pair of lower rails arranged in parallel to each other;
a first upper rail and a second upper rail arranged on a lower rail which is each of the pair of lower rails to be aligned in a longitudinal direction of the lower rail, the first upper rail and the second upper rail being movable along the lower rail;
a first seat coupled to the first upper rail and a second seat coupled to the second upper rail;
a first power feeder that feeds power to an electric component provided for the first seat; and
a second power feeder that feeds power to an electric component provided for the second seat,
wherein the first power feeder and the second power feeder are arranged to extend in an orientation in the longitudinal direction of the lower rail.

2. The vehicle seat according to claim 1, wherein the first power feeder and the second power feeder are located on an identical side of a lower rail which is one of the pair of lower rails.

3. The vehicle seat according to claim 1, wherein the first power feeder and the second power feeder are located between the pair of lower rails.

4. The vehicle seat according to claim 1, wherein the first power feeder and the second power feeder are located at positions at which a lower rail which is one of the pair of lower rails is sandwiched between the first power feeder and the second power feeder.

5. The vehicle seat according to claim 1,
wherein the first power feeder is located at a position adjacent to a lower rail which is one of the pair of lower rails, and
wherein the second power feeder is located at a position adjacent to a lower rail which is the other one of the pair of lower rails.

6. The vehicle seat according to any one of claims 1 to 5,
wherein the first power feeder is located at a position closer to a front end of a lower rail among the lower rails,
wherein the second power feeder is located at a position closer to a back end of a lower rail among the lower rails, and
wherein the first power feeder and the second power feeder are at least partially overlapped with each other vertically or laterally.

7. The vehicle seat according to any one of claims 1 to 3,
wherein the first power feeder is located at a position closer to a front end of a lower rail among the lower rails,
wherein the second power feeder is located at a position closer to a back end of a lower rail among the lower rails, and
wherein a back end of the first power feeder and a front end of the second power feeder are opposed to each other.

8. The vehicle seat according to any one of claims 1 to 5, wherein the first power feeder has a first power feeding rail and a first mover that moves along the first power feeding rail, and the second power feeder has a second power feeding rail and a second mover that moves along the second power feeding rail.

9. The vehicle seat according to any one of claims 1 to 3,
wherein the first power feeder and the second power feeder include a common power feeding rail, and
wherein the first power feeder has a first mover that moves along the common power feeding rail, and the second power feeder has a second mover that moves along the common power feeding rail.

10. The vehicle seat according to any one of claims 1 to 5, further comprising:
a first seat detection sensor that detects a position of the first seat on the pair of lower rails; and
a second seat detection sensor that detects a position of the second seat on the pair of lower rails.
